# EUROPEAN PATENT APPLICATION

(11) **EP 4 782 288 A1**
(43) Date of publication of application: **29.07.2026**
(21) Application number: 24936201.3
(22) Date of filing: 28.11.2024
(51) Int. Cl.: B60W 20/15, B60K 6/485, B60W 10/06, B60W 10/08, F02D 31/00, F02D 41/00, F02D 41/04, F02D 41/08

(54) **ENGINE UNIT AND SADDLE-RIDDEN VEHICLE**

(71) Applicant: YAMAHA HATSUDOKI KABUSHIKI KAISHA, Iwata-shi, Shizuoka 438-8501 (JP)
(72) Inventor: IDE, Keisuke, Iwata-shi, Shizuoka 438-8501 (JP)
(74) Representative: Studio Torta S.p.A.
(86) International application number: PCT/JP2024/042198
(87) International publication number: WO 2026/115680

(57) **Abstract**

The present invention relates to an engine unit 21 and a straddled vehicle 1. The engine unit 21 includes an engine 22, a motor 24, a first sensor 23, and a controller 25. The motor 24 is connected to the engine 22. The motor 24 is configured to rotate the engine 22. The first sensor 23 detects a rotation speed G of the engine 22. The controller 25 performs a first assist control DA1 based on a detection result of the first sensor 23. In the first assist control DA1, the controller 25 causes the motor 24 to rotate the engine 22. When the rotation speed G is lower than a first threshold H1, the controller 25 starts the first assist control DA1. The first threshold H1 is lower than an idle speed range J of the engine 22.

## Description

### Technical Field

The present invention relates to an engine unit and a straddled vehicle.

### Background Art

Patent Literature 1 discloses a motorcycle. The motorcycle includes an engine, a fuel injection device, a motor, a first sensor, a second sensor, and a controller. The fuel injection device supplies fuel to the engine. The engine rotates by combusting fuel. The motor outputs rotation power to the engine. The motor assists rotation of the engine. The first sensor detects a rotation speed of the engine. The second sensor detects an amount of throttle grip operation. The controller controls the fuel injection device and the motor based on the detection result of the first sensor and the detection result of the second sensor. The controller controls the fuel injection device and the motor in a range of the rotation speed of the engine in or higher than an idle speed range.

For example, when the rotation speed is in or higher than the idle speed range and the amount of throttle grip operation is 0, the controller operates only the fuel injection device and does not operate the motor. The controller reduces the amount of fuel supplied by the fuel injection device. Therefore, in the range of the rotation speed in or higher than the idle speed range, the motorcycle reduces the consumption amount of fuel.

For example, when the rotation speed is in or higher than the idle speed range and the amount of throttle grip operation increases from 0, the controller operates the motor in addition to operating the fuel injection device. The rotation speed of the engine is rapidly increased by the motor. Therefore, in the range of the rotation speed in or higher than the idle speed range, the motorcycle has an excellent acceleration response.

### Citation List

### Patent Literature

Patent Literature 1: WO 2014/173982 A

### Summary of Invention

### Technical Problem

The present inventors have found one object related to a straddled vehicle (hereinafter, referred to as "first object"). The first object is to improve the comfort of the straddled vehicle for a driver when the rotation speed of the engine is lower than the idle speed range. The first object has not been conventionally known. The first object itself is new.

The present invention has been made in view of such circumstances, and an object of the present invention is the first object described above. Specifically, the object of the present invention is to provide an engine unit and a straddled vehicle that are comfortable for the driver in a range of an engine rotation speed lower than the idle speed range.

### Solution to Problem

First, the present inventors have conceived of one technology (hereinafter, referred to as "first technology"). The first technology is to cause the motor to assist rotation of the engine in a range of the rotation speed of the engine lower than the idle speed range.

Therefore, a straddled vehicle having the first technology has been studied. Specifically, an engine unit having the first technology and a straddled vehicle including the engine unit have been studied. As a result, it has been found that when the engine unit has the first technology, the comfort of the engine unit for the driver is improved in the range of the rotation speed of the engine lower than the idle speed range. It has been found that when the straddled vehicle includes the engine unit having the first technology, the comfort of the straddled vehicle for the driver is improved in the range of the rotation speed of the engine lower than the idle speed range.

Therefore, the engine unit and the straddled vehicle have been further studied. The present invention is based on these studies. The present invention has the following configuration.

That is, the present invention is an engine unit including:
an engine;
a motor that is connected to the engine and configured to rotate the engine;
a first sensor that detects a rotation speed of the engine; and
a controller that performs a first assist control based on a detection result of the first sensor, wherein
in the first assist control, the controller causes the motor to rotate the engine,
when the rotation speed is lower than a first threshold, the controller starts the first assist control, and
the first threshold is lower than an idle speed range of the engine.

The engine unit includes the engine, the motor, the first sensor, and the controller. The motor is connected to the engine. The motor is configured to rotate the engine. The first sensor detects the rotation speed of the engine. The controller performs the first assist control based on the detection result of the first sensor. In the first assist control, the controller causes the motor to rotate the engine. That is, the first assist control assists the rotation of the engine.

When the rotation speed is lower than the first threshold, the controller starts the first assist control. The first threshold is lower than the idle speed range of the engine. Therefore, when the rotation speed is lower than the idle speed range, the controller starts the first assist control. Therefore, in the range of the rotation speed of the engine lower than the idle speed range, the first assist control assists the rotation of the engine. Therefore, in the range of the rotation speed of the engine lower than the idle speed range, the first assist control appropriately controls the rotation speed of the engine. In the range of the rotation speed of the engine lower than the idle speed range, the first assist control improves the comfort of the engine unit for the driver.

In summary, in the range of the rotation speed of the engine lower than the idle speed range, the engine unit is comfortable for the driver.

It is preferable that
in the engine unit,
when the rotation speed is greater than or equal to the first threshold, the controller does not start the first assist control.

Therefore, in the range of the rotation speed of the engine lower than the idle speed range, the first assist control effectively assists the rotation of the engine. Therefore, in the range of the rotation speed of the engine lower than the idle speed range, it is easy for the first assist control to appropriately control the rotation speed of the engine. In the range of the rotation speed of the engine lower than the idle speed range, it is easy for the first assist control to improve the comfort of the engine unit for the driver.

It is preferable that
in the engine unit,
the controller can start the first assist control only when the rotation speed is lower than the first threshold.

Therefore, in the range of the rotation speed of the engine lower than the idle speed range, it is easy for the first assist control to appropriately control the rotation speed of the engine. In the range of the rotation speed of the engine lower than the idle speed range, it is easy for the first assist control to improve the comfort of the engine unit for the driver.

It is preferable that
in the engine unit,
the idle speed range has a lower limit, and
the first threshold is lower than the lower limit.

Therefore, it is easy to make the first threshold lower than the idle speed range.

It is preferable that
in the engine unit,
a difference between the first threshold and the lower limit is greater than or equal to 50 rpm.

Therefore, when the rotation speed is lower than the lower limit by a value greater than or equal to 50 rpm, the controller starts the first assist control. Therefore, in the range of the rotation speed of the engine lower than the lower limit by a value greater than or equal to 50 rpm, the first assist control assists the rotation of the engine. Therefore, in the range of the rotation speed of the engine lower than the lower limit by a value greater than or equal to 50 rpm, the engine unit is comfortable for the driver.

It is preferable that
in the engine unit,
while the engine is being started, the controller does not start the first assist control.

Therefore, the first assist control does not hinder the start of the engine. Therefore, the first assist control allows the start of the engine.

It is preferable that
in the engine unit,
when the engine starts, the controller performs a second assist control,
in the second assist control, the controller causes the motor to rotate the engine,
while the second assist control is being executed, the first assist control is not executed, and
after the second assist control ends, execution of the first assist control is allowed.

Therefore, the first assist control does not hinder the execution of the second assist control. Therefore, the first assist control allows the execution of the second assist control.

It is preferable that
in the engine unit,
when the rotation speed is lower than the first threshold and higher than a second threshold, the controller starts the first assist control, and
the second threshold is lower than the first threshold and higher than 0.

Therefore, in the range of the rotation speed of the engine lower than the idle speed range and higher than 0, the first assist control assists the rotation of the engine. Therefore, in the range of the rotation speed of the engine lower than the idle speed range and higher than 0, the engine unit is comfortable for the driver.

It is preferable that
in the engine unit,
when the rotation speed is less than or equal to the second threshold, the controller does not start the first assist control.

Therefore, in the range of the rotation speed of the engine lower than the idle speed range and higher than 0, the first assist control effectively assists the rotation of the engine. Therefore, in the range of the rotation speed of the engine lower than the idle speed range and higher than 0, it is easy for the first assist control to appropriately control the rotation speed of the engine. In the range of the rotation speed of the engine lower than the idle speed range and higher than 0, it is easy for the first assist control to improve the comfort of the engine unit for the driver.

It is preferable that
in the engine unit,
the controller can start the first assist control only when the rotation speed is lower than the first threshold and higher than the second threshold.

Therefore, in the range of the rotation speed of the engine lower than the idle speed range and higher than 0, the first assist control effectively assists the rotation of the engine. Therefore, in the range of the rotation speed of the engine lower than the idle speed range and higher than 0, it is easy for the first assist control to appropriately control the rotation speed of the engine. In the range of the rotation speed of the engine lower than the idle speed range and higher than 0, it is easy for the first assist control to improve the comfort of the engine unit for the driver.

It is preferable that
in the engine unit,
the second threshold is higher than half the lower limit.

Therefore, when the rotation speed is lower than the idle speed range and higher than half the lower limit, the controller starts the first assist control. Therefore, in the range of the rotation speed of the engine lower than the idle speed range and higher than half the lower limit, the first assist control assists the rotation of the engine. Therefore, in the range of the rotation speed of the engine lower than the idle speed range and higher than half the lower limit, the engine unit is comfortable for the driver.

It is preferable that
in the engine unit,
the second threshold is higher than half the upper limit.

Therefore, when the rotation speed is lower than the idle speed range and higher than half the upper limit, the controller starts the first assist control. Therefore, in the range of the rotation speed of the engine lower than the idle speed range and higher than half the upper limit, the first assist control assists the rotation of the engine. Therefore, in the range of the rotation speed of the engine lower than the idle speed range and higher than half the upper limit, the engine unit is comfortable for the driver.

It is preferable that
in the engine unit,
when the rotation speed decreases from a value higher than the first threshold to a value lower than the first threshold, the controller starts the first assist control.

Therefore, when the rotation speed decreases from a value higher than the first threshold to a value lower than the first threshold, the first assist control assists the rotation of the engine. Therefore, when the rotation speed decreases from a value higher than the first threshold to a value lower than the first threshold, the engine unit is comfortable for the driver.

It is preferable that
in the engine unit,
when the rotation speed decreases from a value in or higher than the idle speed range to a value lower than the first threshold, the controller starts the first assist control.

Therefore, when the rotation speed decreases from a value in or higher than the idle speed range to a value lower than the first threshold, the first assist control assists the rotation of the engine. Therefore, when the rotation speed decreases from a value in or higher than the idle speed range to a value lower than the first threshold, the engine unit is comfortable for the driver.

It is preferable that
the engine unit further includes:
a generator that is configured to generate power by rotation of the engine, wherein
a period during which the generator generates electric power after an end of the first assist control, which is the latest, is defined as a latest power generation period, and
even in a case where the rotation speed is lower than the first threshold, the controller does not start the first assist control until the latest power generation period becomes longer than or equal to a first reference time.

Therefore, the generator appropriately generates power in the latest power generation period. Therefore, when two first assist controls are executed, the balance of electric power is not continuously reduced. After one first assist control ends and before another first assist control starts, the balance of electric power increases.

It is preferable that
in the engine unit,
when the rotation speed is lower than the first threshold and the latest power generation period is longer than or equal to the first reference time, the controller starts the first assist control.

Therefore, the generator generates a sufficient amount of electric power in the latest power generation period. A plurality of first assist controls is executed at intervals longer than or equal to the first reference time.

It is preferable that
in the engine unit,
the amount of electric power consumed in one first assist control is smaller than the amount of electric power generated by the generator in the first reference time.

Therefore, the generator generates a sufficient amount of electric power in the latest power generation period.

It is preferable that
in the engine unit,
the motor is configured to generate rotation power by electric power discharged from a battery, and
the generator is configured to charge the battery.

Therefore, it is easy for the motor to generate rotation power. Therefore, it is easy for the motor to rotate the engine. In the first assist control, the battery discharges to the motor. In the power generation period, the battery is charged by the generator. As described above, the controller does not start the first assist control until the latest power generation period becomes longer than or equal to the first reference time. Therefore, when two first assist controls are executed, the balance of electric power of the battery is not continuously reduced. After one first assist control ends and before another first assist control starts, the balance of electric power of the battery increases.

It is preferable that
in the engine unit,
the motor also serves as the generator.

Therefore, it is easy to downsize the whole of the motor and generator.

It is preferable that
in the engine unit,
the motor is integrated with the generator.

Therefore, it is easy to downsize the whole of the motor and generator.

It is preferable that
in the engine unit,
the controller does not start the first assist control when the controller performs an engine stop control for stopping the engine even in a case where the rotation speed is lower than the first threshold.

Therefore, the first assist control does not hinder the execution of the engine stop control. The first assist control allows the execution of the engine stop control.

It is preferable that
in the engine unit,
the controller starts the first assist control when the rotation speed is lower than the first threshold and the controller does not perform the engine stop control.

Therefore, the first assist control starts at an appropriate timing.

It is preferable that
in the engine unit,
the controller does not start the first assist control when a first operation for continuing to rotate the engine is not being performed even in a case where the rotation speed is lower than the first threshold.

Therefore, the first assist control does not hinder the stop of the engine. The first assist control allows the engine to stop.

It is preferable that
in the engine unit,
the controller starts the first assist control when the rotation speed is lower than the first threshold and the first operation for continuing rotation of the engine is being performed.

Therefore, the first assist control starts at an appropriate timing.

It is preferable that
in the engine unit,
the controller does not start the first assist control when a predetermined device is not normal even in a case where the rotation speed is lower than the first threshold.

Therefore, the first assist control does not start at an inappropriate timing.

It is preferable that
in the engine unit,
the controller starts the first assist control when the rotation speed is lower than the first threshold and the predetermined device is normal.

Therefore, the first assist control starts at an appropriate timing.

It is preferable that
in the engine unit,
the controller ends the first assist control based on the detection result of the first sensor.

Therefore, the timing at which the first assist control ends depends on the rotation speed of the engine.

Therefore, the first assist control ends at an appropriate timing.

Therefore, the engine unit is comfortable for the driver.

It is preferable that
in the engine unit,
when the rotation speed is greater than or equal to a third threshold, the controller ends the first assist control, and
the third threshold is higher than the first threshold.

Therefore, it is easy for the first assist control to end at an appropriate timing.

It is preferable that
in the engine unit,
the idle speed range has an upper limit, and
the third threshold is less than or equal to the upper limit.

Therefore, it is easy for the first assist control to end at an appropriate timing.

It is preferable that
in the engine unit,
the third threshold is greater than or equal to the lower limit.

Therefore, it is easy for the first assist control to end at an appropriate timing.

It is preferable that
in the engine unit,
the controller acquires a first amount based on the detection result of the first sensor,
the first amount is an increase in the rotation speed due to combustion of the engine, and
the controller ends the first assist control based on the first amount.

Therefore, it is easy for the first assist control to end at an appropriate timing.

It is preferable that
in the engine unit,
when the first amount is greater than or equal to a reference amount, the controller ends the first assist control.

Therefore, it is easy for the first assist control to end at an appropriate timing.

It is preferable that
in the engine unit,
the rotation speed includes:
   a first instantaneous value indicating the rotation speed at a moment at which combustion of the engine starts, and
   a second instantaneous value indicating the rotation speed at a moment at which the combustion of the engine ends,
      and
   the first amount is an increase amount from the first instantaneous value to the second instantaneous value.

Therefore, it is easy to acquire the first amount.

It is preferable that
in the engine unit,
the engine repeats a cycle,
the engine combusts in each cycle, and
the first instantaneous value and the second instantaneous value are obtained during each cycle.

Therefore, it is easy to acquire the first amount in each cycle.

It is preferable that
in the engine unit,
the controller ends the first assist control when a first assist period during which the first assist control is executed is longer than a second reference time.

Therefore, the first assist period is limited to be less than or equal to the second reference time.

Therefore, the first assist period is not excessively long.

It is preferable that
in the engine unit,
the second reference time is less than or equal to 1 second.

Therefore, the first assist period is relatively short.

It is preferable that
in the engine unit,
the second reference time is shorter than the first reference time.

Therefore, it is easy to increase the balance of electric power.

It is preferable that
in the engine unit,
the controller ends the first assist control when the controller performs the engine stop control for stopping the engine.

Therefore, the first assist control does not hinder the execution of the engine stop control.

The first assist control allows the execution of the engine stop control.

It is preferable that
in the engine unit,
the controller ends the first assist control when a second operation for stopping the engine is performed.

Therefore, the first assist control does not hinder the stop of the engine.

The first assist control allows the engine to stop.

It is preferable that
in the engine unit,
when a predetermined device is abnormal, the controller ends the first assist control.

Therefore, the first assist control does not hinder the stop of the engine.

The first assist control allows the engine to stop.

It is preferable that
the engine unit
further includes a fuel injection device, and
the controller controls the fuel injection device to supply fuel to the engine in a period during which the first assist control is executed.

Therefore, in the period during which the first assist control is executed, the controller controls the fuel injection device to rotate the engine. Therefore, in the period during which the first assist control is executed, the controller causes the fuel injection device to rotate the engine and causes the motor to assist the rotation of the engine.

Therefore, in the period during which the first assist control is executed, the controller more appropriately controls the rotation speed of the engine.

It is preferable that
in the engine unit,
the controller controls the fuel injection device to adjust an amount of fuel supplied to the engine in the period during which the first assist control is executed.

Therefore, it is easy for the controller to more appropriately control the rotation speed of the engine in the period during which the first assist control is executed.

It is preferable that
the engine unit
further includes a throttle device, and
the controller controls the throttle device to supply air to the engine in the period during which the first assist control is executed.

Therefore, in the period during which the first assist control is executed, the controller controls the throttle device to rotate the engine. Therefore, in the period during which the first assist control is executed, the controller causes the throttle device to rotate the engine and causes the motor to assist the rotation of the engine. Therefore, in the period during which the first assist control is executed, the controller more appropriately controls the rotation speed of the engine.

It is preferable that
in the straddled vehicle,
the controller controls the throttle device to adjust an amount of air supplied to the engine in the period during which the first assist control is executed.

Therefore, it is easy for the controller to more appropriately control the rotation speed of the engine in the period during which the first assist control is executed.

It is preferable that
the engine unit
further includes an ignition device, and
the controller controls the ignition device to ignite air-fuel mixture in the engine in the period during which the first assist control is executed.

Therefore, in the period during which the first assist control is executed, the controller controls the ignition device to rotate the engine. Therefore, in the period during which the first assist control is executed, the controller causes the ignition device to rotate the engine and causes the motor to assist the rotation of the engine. Therefore, in the period during which the first assist control is executed, the controller more appropriately controls the rotation speed of the engine.

It is preferable that
in the straddled vehicle,
the controller controls the ignition device to adjust the ignition timing of the air-fuel mixture in the engine in the period during which the first assist control is executed.

Therefore, it is easy for the controller to more appropriately control the rotation speed of the engine in the period during which the first assist control is executed.

The present invention is a straddled vehicle
including
the above-described engine unit.

As described above, in the range of the rotation speed of the engine lower than the idle speed range, the engine unit is comfortable for the driver. Therefore, in the range of the rotation speed of the engine lower than the idle speed range, the straddled vehicle is comfortable for the driver.

It is preferable that
in the straddled vehicle,
the controller starts the first assist control regardless of a speed of the straddled vehicle.

Therefore, regardless of the speed of the straddled vehicle, the straddled vehicle is comfortable for the driver in the range of the rotation speed of the engine lower than the idle speed range.

It is preferable that
in the straddled vehicle,
the controller starts the first assist control regardless of an acceleration of the straddled vehicle.

Therefore, regardless of the acceleration of the straddled vehicle, the straddled vehicle is comfortable for the driver in the range of the rotation speed of the engine lower than the idle speed range.

It is preferable that
in the straddled vehicle,
the controller starts the first assist control regardless of an amount of operation of an accelerator provided in the straddled vehicle.

Therefore, regardless of the amount of operation of the accelerator, the straddled vehicle is comfortable for the driver in the range of the rotation speed of the engine lower than the idle speed range.

It is preferable that
in the straddled vehicle,
the controller starts the first assist control regardless of an operation of the throttle device provided in the engine unit.

Therefore, regardless of the operation of the throttle device, the straddled vehicle is comfortable for the driver in the range of the rotation speed of the engine lower than the idle speed range.

It is preferable that
in the straddled vehicle,
the controller ends the first assist control regardless of the speed of the straddled vehicle.

Therefore, regardless of the speed of the straddled vehicle, the straddled vehicle is comfortable for the driver in the range of the rotation speed of the engine lower than the idle speed range.

It is preferable that
in the straddled vehicle,
the controller ends the first assist control regardless of the acceleration of the straddled vehicle.

Therefore, regardless of the acceleration of the straddled vehicle, the straddled vehicle is comfortable for the driver in the range of the rotation speed of the engine lower than the idle speed range.

It is preferable that
in the straddled vehicle,
the controller ends the first assist control regardless of the amount of operation of the accelerator provided in the straddled vehicle.

Therefore, regardless of the amount of operation of the accelerator, the straddled vehicle is comfortable for the driver in the range of the rotation speed of the engine lower than the idle speed range.

It is preferable that
in the straddled vehicle,
the controller ends the first assist control regardless of the operation of the throttle device provided in the engine unit.

Therefore, regardless of the operation of the throttle device, the straddled vehicle is comfortable for the driver in the range of the rotation speed of the engine lower than the idle speed range.

### Advantageous Effects of Invention

In the range of the rotation speed of the engine lower than the idle speed range, the engine unit is comfortable for the driver.

In the range of the rotation speed of the engine lower than the idle speed range, the straddled vehicle is comfortable for the driver.

### Brief Description of Drawings

FIG. 1 is a side view of a straddled vehicle according to a first embodiment.
FIG. 2 is a flowchart illustrating a procedure of an operation example of an engine unit of the first embodiment.
FIG. 3 is a timing chart illustrating the operation example of the engine unit of the first embodiment.
FIG. 4 is a side view of a straddled vehicle according to a second embodiment.
FIG. 5 is a partial cross-sectional view illustrating a configuration of the engine unit.
FIG. 6 is a diagram of a motor generator as viewed from a direction of a crankshaft axis.
FIG. 7 is a block diagram illustrating an electrical configuration of the engine unit.
FIG. 8 is a flowchart illustrating a procedure of an operation example of an engine unit of the second embodiment.
FIG. 9 is a timing chart illustrating the operation example of the engine unit of the second embodiment.
FIG. 10 is a graph illustrating a first amount.
FIG. 11 is a side view of a straddled vehicle according to a third embodiment.
FIG. 12 is a block diagram illustrating an electrical configuration of the engine unit.
FIG. 13 is a table illustrating specific examples of start conditions.
FIG. 14 is a table illustrating specific examples of end conditions.

### Description of Embodiments

Hereinafter, a straddled vehicle according to the present invention will be described with reference to the drawings.

### 1. First embodiment

### 1-1. Schematic configuration of straddled vehicle 1

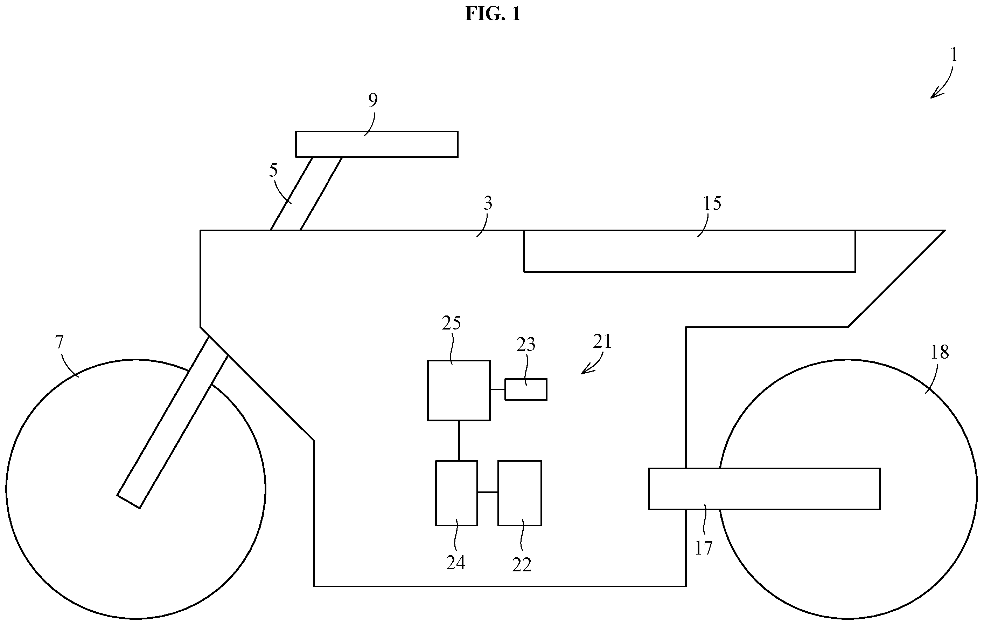

FIG. 1 is a side view of a straddled vehicle 1 according to a first embodiment. The straddled vehicle 1 is, for example, a motorcycle.

The straddled vehicle 1 includes a vehicle body 3, a front fork 5, a front wheel 7, and a handlebar 9. The front fork 5 is supported by the vehicle body 3. The front wheel 7 is supported by the front fork 5. The handlebar 9 is supported by the front fork 5.

The straddled vehicle 1 includes a seat 15. The seat 15 is supported by the vehicle body. The seat 15 is disposed more rearward than the handlebar 9.

A driver rides on the straddled vehicle 1. The driver sits on the seat 15. The driver grips the handlebar 9. The driver is also referred to as rider.

The straddled vehicle 1 includes a swing arm 17 and a rear wheel 18. The swing arm 17 is supported by the vehicle body 3. The rear wheel 18 is supported by the swing arm 17. The rear wheel 18 is disposed more rearward than the front wheel 7.

The straddled vehicle 1 includes an engine unit 21. The engine unit 21 is supported by the vehicle body 3.

The engine unit 21 includes an engine 22. The engine 22 is an internal combustion engine. The engine 22 rotates. Hereinafter, the rotation speed of the engine 22 is appropriately referred to as "rotation speed G". The engine 22 rotates at the rotation speed G. The engine 22 generates rotation power. The rotation power of the engine 22 is for propelling the straddled vehicle 1.

For example, the engine 22 drives the rear wheel 18. For example, the straddled vehicle 1 includes a power transmission mechanism which is not illustrated. The power transmission mechanism transmits rotation power from the engine 22 to the rear wheel 18. The power transmission mechanism is, for example, a chain. When the power transmission mechanism transmits rotation power to the rear wheel 18, the rear wheel 18 rotates, and the straddled vehicle 1 moves forward.

### 1-2. Schematic configuration of engine unit 21

The engine unit 21 includes a first sensor 23 in addition to the engine 22. The first sensor 23 detects the rotation speed G.

The engine unit 21 includes a motor 24. The motor 24 generates rotation power. The motor 24 converts electric power into rotation power. The motor 24 is also referred to as electric motor.

The motor 24 is connected to the engine 22. The motor 24 is configured to rotate the engine 22. The motor 24 outputs rotation power to the engine 22.

The engine unit 21 includes a controller 25. The controller 25 acquires a detection result of the first sensor 23. The controller 25 controls the motor 24 based on the detection result of the first sensor 23. The controller 25 may be an engine control unit (ECU) provided in the straddled vehicle 1.

For example, the controller 25 performs a first assist control. In the first assist control, the controller 25 causes the motor 24 to rotate the engine 22. Hereinafter, the first assist control is appropriately referred to as "first assist control DA1".

Although not illustrated, the controller 25 includes a memory. The memory stores information. The information includes, for example, information related to the first assist control DA1. The information related to the first assist control DA1 includes, for example, a program for the first assist control DA1, a condition for starting the first assist control DA1, and a condition for ending the first assist control DA1. Hereinafter, the condition for starting the first assist control DA1 is appropriately referred to as "start condition A". The condition for ending the first assist control DA1 is appropriately referred to as "end condition B". The memory includes, for example, at least one of a semiconductor memory and a hard disk.

Although not illustrated, the controller 25 includes, for example, a processor. The processor reads information in the memory. The processor executes, for example, the program for the first assist control DA1. The processor refers to, for example, the start condition A and the end condition B. The processor includes, for example, a central processing unit (CPU).

### 1-3. Operation example of engine unit 21 of first embodiment

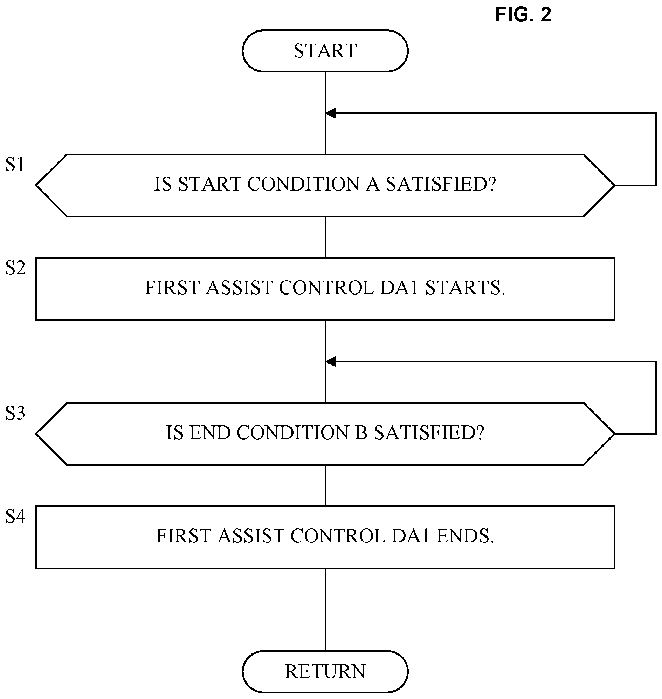

FIG. 2 is a flowchart illustrating a procedure of an operation example of the engine unit 21 of the first embodiment. In the following operation example, it is assumed that the engine 22 is rotating. It is assumed that the engine 22 is not starting. It is assumed that the engine 22 has already completed starting.

### Step S1: Is the start condition A satisfied?

The controller 25 determines whether the start condition A is satisfied. When the start condition A is satisfied, the process proceeds to step S2. Otherwise, the processing in step S1 is performed again.

### Step S2: The first assist control DA1 starts.

The controller 25 starts the first assist control DA1.

### Step S3: Is the end condition B satisfied?

The controller 25 determines whether the end condition B is satisfied. When the end condition B is satisfied, the process proceeds to step S4. Otherwise, the processing in step S3 is performed again.

### Step S4: The first assist control DA1 ends.

The controller 25 ends the first assist control DA1.

Here, the start condition A depends on the rotation speed G. Therefore, the controller 25 determines whether the start condition A is satisfied based on the detection result of the first sensor 23. Then, the controller 25 starts the first assist control DA1 based on the detection result of the first sensor 23.

For example, the start condition A depends only on the rotation speed G. The controller 25 determines whether the start condition A is satisfied based only on the detection result of first sensor 23. Then, the controller 25 starts the first assist control DA1 based only on the detection result of the first sensor 23.

For example, the end condition B depends on the rotation speed G. Therefore, the controller 25 determines whether the end condition B is satisfied based on the detection result of the first sensor 23. Then, the controller 25 ends the first assist control DA1 based on the detection result of the first sensor 23.

For example, the end condition B depends only on the rotation speed G. The controller 25 determines whether the end condition B is satisfied based only on the detection result of the first sensor 23. Then, the controller 25 ends the first assist control DA1 based only on the detection result of the first sensor 23.

As described above, the controller 25 performs the first assist control DA1 based on the detection result of the first sensor 23. For example, the controller 25 performs the first assist control DA1 based only on the detection result of the first sensor 23.

A specific example of the start condition A will be described. For example, the start condition A includes a first start condition A1. The first start condition A1 is that "the rotation speed G is lower than a first threshold H1". When the first start condition A1 is satisfied, the start condition A is satisfied. When the first start condition A1 is not satisfied, the start condition A is not satisfied.

A specific example of the end condition B will be described. For example, the end condition B includes a first end condition B1. The first end condition B1 is that "the rotation speed G is higher than a third threshold H3". When the first end condition B1 is satisfied, the end condition B is satisfied. When the first end condition B1 is not satisfied, the end condition B is not satisfied.

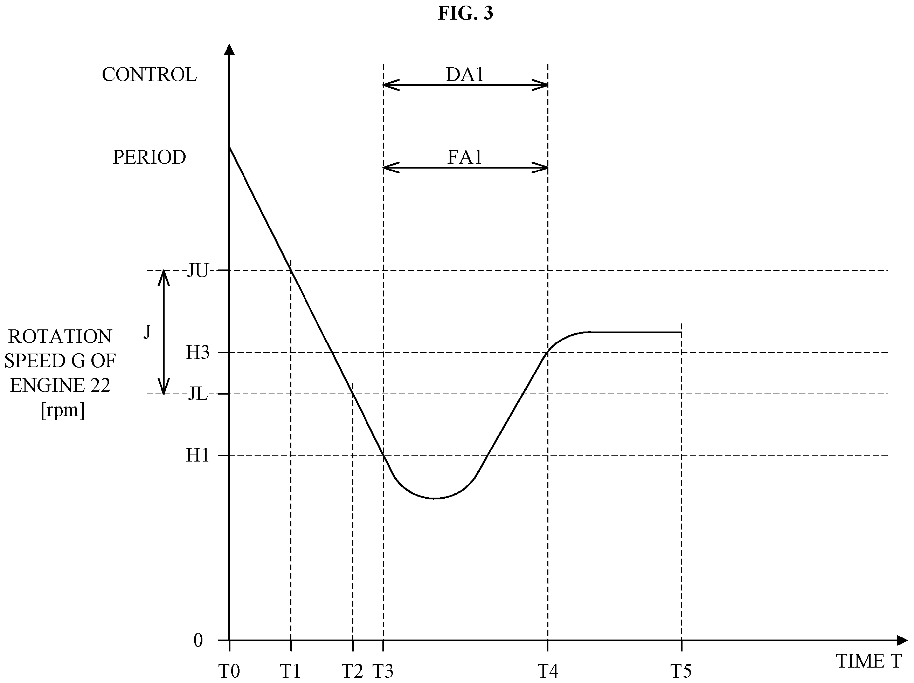

FIG. 3 is a timing chart illustrating an operation example of the engine unit 21 of the first embodiment. A horizontal axis represents time T. A vertical axis represents the control executed by the controller 25, the period during which the control by the controller 25 is executed, and the rotation speed G.

The rotation speed G includes an idle speed range J of the engine 22. When the rotation speed G is within the idle speed range J, the straddled vehicle 1 is stopped. The idle speed range J is, for example, in a range of 1,200 rpm to 1,400 rpm.

The idle speed range J has an upper limit JU. The upper limit JU is, for example, 1,400 rpm.

The idle speed range J has a lower limit JL. The lower limit JL is lower than the upper limit JU. The lower limit JL is, for example, 1,200 rpm.

The first threshold H1 is set in advance.

The first threshold H1 is lower than the idle speed range J.

The first threshold H1 is lower than the upper limit JU.

The first threshold H1 is lower than the lower limit JL.

A difference between the first threshold H1 and the lower limit JL is 50 rpm or more.

The first threshold H1 is, for example, 1,000 rpm. The difference between the first threshold H1 and the lower limit JL is, for example, 200 rpm.

The first threshold H1 is higher than 0.

The third threshold H3 is set in advance.

The third threshold H3 is higher than 0.

The third threshold H3 is higher than the first threshold H1.

The third threshold H3 is within the idle speed range J.

The third threshold H3 is greater than or equal to the lower limit JL.

The third threshold is less than or equal to the upper limit JU.

The third threshold H3 is, for example, 1,300 rpm.

From time T0 to time T5, the controller 25 acquires the rotation speed G based on the detection result of the first sensor 23.

From time T0 to time T5, the rotation speed G is higher than 0.

From time T0 to time T3, the rotation speed G is higher than the first threshold H1. Therefore, the first start condition A1 is not satisfied from time T0 to time T3. Therefore, the start condition A is not satisfied from time T0 to time T3. Therefore, the controller 25 does not start the first assist control DA1 from time T0 to time T3. From time T0 to time T3, the controller 25 does not perform the first assist control DA1.

At time T3, the rotation speed G is lower than the first threshold H1.

This will be described in more detail. Before time T3, the rotation speed G is higher than the first threshold H1. After time T3, the rotation speed G is lower than the first threshold H1. Therefore, at time T3, the rotation speed G decreases from a value higher than the first threshold H1 to a value lower than the first threshold H1.

Before time T2, the rotation speed G is in or higher than the idle speed range J. Specifically, from time T0 to time T1, the rotation speed G is higher than the idle speed range J. From time T1 to time T2, the rotation speed G is in the idle speed range J. After time T3, the rotation speed G is lower than the first threshold H1. Therefore, at time T3, the rotation speed G decreases from a value in or higher than the idle speed range J to a value lower than the first threshold H1.

Therefore, at time T3, the first start condition A1 is satisfied. Therefore, at time T3, the start condition A is satisfied. Therefore, at time T3, the controller 25 starts the first assist control DA1.

From time T3 to time T4, the rotation speed G is lower than the third threshold H3. Therefore, the first end condition B1 is not satisfied from time T3 to time T4. Therefore, the end condition B is not satisfied from time T3 to time T4. Therefore, the controller 25 does not end the first assist control DA1 from time T3 to time T4.

At time T4, the rotation speed G is greater than or equal to the third threshold H3. Therefore, at time T4, the first end condition B1 is satisfied. Therefore, at time T4, the end condition B is satisfied. Therefore, at time T4, the controller 25 ends the first assist control DA1.

As a result, the first assist control is not executed from time T0 to time T3. The first assist control is executed from time T3 to time T4. The first assist control is not executed from time T4 to time T5.

A period during which the first assist control is executed is referred to as "first assist period FA1". The first assist period FA1 is a period from time T3 to time T4.

In the first assist control DA1, the controller 25 causes the motor 24 to rotate the engine 22. In the first assist control DA1, the motor 24 assists the rotation of the engine 22. That is, the first assist control DA1 assists the rotation of the engine 22.

Therefore, in the first assist period FA1, the rotation speed G is less likely to decrease. In the first assist period FA1, the rotation speed G is more likely to increase.

When the first assist control DA1 starts, the rotation speed G is lower than the idle speed range J. Therefore, in the range of the rotation speed G lower than the idle speed range J, the rotation speed G is less likely to decrease. In the range of the rotation speed G lower than the idle speed range J, the rotation speed G is less likely to decrease to an excessively low value. In the range of the rotation speed G lower than the idle speed range J, the decrease in the rotation speed G is more likely to stop. In the range of the rotation speed G lower than the idle speed range J, the rotation speed G is more likely to increase. In the range of the rotation speed G lower than the idle speed range J, the rotation speed G is more likely to change from decrease to increase.

In the first assist period FA1, the rotation speed G is more likely to increase from a value lower than the idle speed range J to a value within the idle speed range J.

A case where the controller 25 starts the first assist control DA1 and a case where the controller 25 does not start the first assist control DA1 are listed below.

When the rotation speed G is lower than the first threshold H1, the controller 25 starts the first assist control DA1. In other words, the controller 25 starts the first assist control DA1 on condition that the rotation speed G is lower than the first threshold H1.

When the rotation speed G is greater than or equal to the first threshold H1, the controller 25 does not start the first assist control DA1.

The controller 25 can start the first assist control DA1 only when the rotation speed G is lower than the first threshold H1.

For example, when the rotation speed G is lower than the idle speed range J, the controller 25 starts the first assist control DA1.

When the rotation speed G is in or higher than the idle speed range J, the controller 25 does not start the first assist control DA1.

For example, when the rotation speed G is lower than the lower limit JL, the controller 25 starts the first assist control DA1.

When the rotation speed G is higher than the lower limit JL, the controller 25 starts the first assist control DA1.

For example, when the rotation speed G is lower than the lower limit JL by 50 rpm or more, the controller 25 starts the first assist control DA1.

For example, when the difference between the rotation speed G and the lower limit JL is smaller than 50 rpm, the controller 25 does not start the first assist control DA1. When the rotation speed G is near the lower limit JL, the controller 25 does not start the first assist control DA1. For example, when the rotation speed G is substantially in the idle speed range J, the controller 25 does not start the first assist control DA1.

When the rotation speed G decreases from a value higher than the first threshold H1 to a value lower than the first threshold H1, the controller 25 starts the first assist control DA1.

When the rotation speed G decreases from a value in or higher than the idle speed range J to a value lower than the first threshold H1, the controller 25 starts the first assist control DA1.

When the engine 22 does not rotate, the controller 25 does not start the first assist control DA1.

The controller 25 can start the first assist control DA1 only when the engine 22 is rotating.

When the rotation speed G is 0, the controller 25 does not start the first assist control DA1.

While the engine 22 is being started, the controller 25 does not start the first assist control DA1.

The start condition A does not depend on the speed of the straddled vehicle 1. Regardless of the speed of the straddled vehicle 1, the controller 25 starts the first assist control DA1.

For example, even when the speed of the straddled vehicle 1 is 0, the controller 25 can start the first assist control DA1. For example, even when the straddled vehicle 1 is stopped, the controller 25 can start the first assist control DA1. For example, even when the speed of the straddled vehicle 1 is higher than 0, the controller 25 can start the first assist control DA1. For example, even when the straddled vehicle 1 is traveling, the controller 25 can start the first assist control DA1.

The start condition A does not depend on the acceleration of the straddled vehicle 1. Regardless of the acceleration of the straddled vehicle 1, the controller 25 starts the first assist control DA1.

For example, even when the acceleration of the straddled vehicle 1 is 0, the controller 25 can start the first assist control DA1. For example, even when the straddled vehicle 1 is traveling at a constant speed, the controller 25 can start the first assist control DA1. For example, even when the acceleration of the straddled vehicle 1 is larger than 0, the controller 25 can start the first assist control DA1. For example, even when the straddled vehicle 1 accelerates, the controller 25 can start the first assist control DA1. For example, even when the straddled vehicle 1 starts, the controller 25 can start the first assist control DA1. For example, even when the acceleration of the straddled vehicle 1 is smaller than 0, the controller 25 can start the first assist control DA1. For example, even when the straddled vehicle 1 decelerates, the controller 25 can start the first assist control DA1.

Although not illustrated, the straddled vehicle 1 includes an accelerator. The start condition A does not depend on the amount of operation of the accelerator. Regardless of the amount of operation of the accelerator, the controller 25 starts the first assist control DA1.

For example, even when the amount of operation of the accelerator is 0, the controller 25 can start the first assist control DA1. For example, even when the amount of operation of the accelerator is larger than 0, the controller 25 can start the first assist control DA1. For example, even when the amount of operation of the accelerator increases, the controller 25 can start the first assist control DA1. For example, even when the amount of operation of the accelerator decreases, the controller 25 can start the first assist control DA1.

Although not illustrated, the engine unit 21 includes a throttle device. The start condition A does not depend on the operation of the throttle device. Regardless of the operation of the throttle device, the controller 25 starts the first assist control DA1.

For example, even when the throttle device operates, the controller 25 can start the first assist control DA1. For example, even when the throttle device does not operate, the controller 25 can start the first assist control DA1.

A case where the controller 25 ends the first assist control DA1 and a case where the controller 25 does not end the first assist control DA1 are listed below.

When the rotation speed G is greater than or equal to the third threshold H3, the controller 25 ends the first assist control DA1.

In other words, the controller 25 ends the first assist control DA1 on condition that the rotation speed G is greater than or equal to the third threshold H1.

When the rotation speed G is lower than the third threshold H3, the controller 25 does not end the first assist control DA1.

For example, when the rotation speed G is lower than the idle speed range J, the controller 25 does not end the first assist control DA1.

For example, when the rotation speed G is within the idle speed range J, the controller 25 ends the first assist control DA1.

For example, when the rotation speed G is greater than or equal to the lower limit JU, the controller 25 ends the first assist control DA1.

For example, when the rotation speed G is less than or equal to the upper limit JU, the controller 25 ends the first assist control DA1.

For example, when the rotation speed G is greater than or equal to the lower limit JU and less than or equal to the upper limit JU, the controller 25 ends the first assist control DA1.

For example, before the rotation speed G becomes higher than the idle speed range J, the controller 25 ends the first assist control DA1. Therefore, when the rotation speed G is higher than the idle speed range J, the controller 25 does not execute the first assist control DA1. In other words, in the range of the rotation speed G higher than the idle speed range J, the controller 25 does not execute the first assist control DA1.

For example, before the rotation speed G becomes higher than the upper limit JU, the controller 25 ends the first assist control DA1. Therefore, when the rotation speed G is higher than the upper limit JU, the controller 25 does not execute the first assist control DA1. In other words, in the range of the rotation speed G higher than the upper limit JU, the controller 25 does not execute the first assist control DA1.

The end condition B does not depend on the speed of the straddled vehicle 1. Regardless of the speed of the straddled vehicle 1, the controller 25 ends the first assist control DA1.

The end condition B does not depend on the acceleration of the straddled vehicle 1. Regardless of the acceleration of the straddled vehicle 1, the controller 25 ends the first assist control DA1.

The end condition B does not depend on the amount of operation of the accelerator of the straddled vehicle 1. Regardless of the amount of operation of the accelerator, the controller 25 ends the first assist control DA1.

The end condition B does not depend on the operation of the throttle device of the engine unit 21. Regardless of the operation of the throttle device, the controller 25 ends the first assist control DA1.

### 1-4. Effects of first embodiment

The engine unit 21 includes the engine 22, the motor 24, the first sensor 23, and the controller 25. The motor 24 is connected to the engine 22. The motor 24 is configured to rotate the engine 22. The first sensor 23 detects the rotation speed G of the engine 22. The controller 25 performs the first assist control DA1 based on the detection result of the first sensor 23. In the first assist control DA1, the controller 25 causes the motor 24 to rotate the engine 22. That is, the first assist control DA1 assists the rotation of the engine 22.

When the rotation speed G is lower than the first threshold H1, the controller 25 starts the first assist control DA1. The first threshold H1 is lower than the idle speed range J. Therefore, when the rotation speed G is lower than the idle speed range J, the controller 25 starts the first assist control DA1. Therefore, in the range of the rotation speed G lower than the idle speed range J, the first assist control DA1 assists the rotation of the engine 22. Therefore, in the range of the rotation speed G lower than the idle speed range J, the first assist control DA1 appropriately controls the rotation speed G. In the range of the rotation speed G lower than the idle speed range J, the first assist control DA1 improves the comfort of the engine unit 21 for the driver.

In summary, in the range of the rotation speed G lower than the idle speed range J, the engine unit 21 is comfortable for the driver.

When the rotation speed G is greater than or equal to the first threshold H1, the controller 25 does not start the first assist control DA1. Therefore, when the rotation speed G is in or higher than the idle speed range J, the first assist control DA1 does not start. That is, the first assist control DA1 focuses on the range of the rotation speed G lower than the idle speed range J. Therefore, in the range of the rotation speed G lower than the idle speed range J, the first assist control DA1 effectively assists the rotation of the engine 22. Therefore, in the range of the rotation speed G lower than the idle speed range J, it is easy for the first assist control DA1 to appropriately control the rotation speed G. In the range of the rotation speed G lower than the idle speed range J, it is easy for the first assist control DA1 to improve the comfort of the engine unit 21 for the driver.

The controller 25 can start the first assist control DA1 only when the rotation speed G is lower than the first threshold H1. Therefore, the first assist control DA1 focuses on the range of the rotation speed G lower than the idle speed range J. Therefore, in the range of the rotation speed G lower than the idle speed range J, the first assist control DA1 effectively assists the rotation of the engine 22. Therefore, in the range of the rotation speed G lower than the idle speed range J, it is easy for the first assist control DA1 to appropriately control the rotation speed G. In the range of the rotation speed G lower than the idle speed range J, it is easy for the first assist control DA1 to improve the comfort of the engine unit 21 for the driver.

The idle speed range J has the lower limit JL. The first threshold H1 is lower than the lower limit JL. Therefore, it is easy to make the first threshold H1 lower than the idle speed range J.

The difference between the first threshold H1 and the lower limit JL is 50 rpm or more. Therefore, when the rotation speed G is lower than the lower limit by 50 rpm or more, the controller 25 starts the first assist control DA1. Therefore, in the range of the rotation speed G lower than the lower limit JL by 50 rpm or more, the first assist control DA1 assists the rotation of the engine 22. Therefore, in the range of the rotation speed G lower than the lower limit JL by 50 rpm or more, the engine unit 21 is comfortable for the driver.

While the engine 22 is being started, the controller 25 does not start the first assist control DA1. Therefore, the first assist control DA1 does not hinder the start of the engine 22. Therefore, the first assist control DA1 allows the start of the engine 22.

When the rotation speed G decreases from a value higher than the first threshold H1 to a value lower than the first threshold H1, the controller 25 starts the first assist control DA1. Therefore, when the rotation speed G decreases from a value higher than the first threshold H1 to a value lower than the first threshold H1, the first assist control DA1 assists the rotation of the engine 22. Therefore, when the rotation speed G decreases from a value higher than the first threshold H1 to a value lower than the first threshold H1, the engine unit 21 is comfortable for the driver.

When the rotation speed G decreases from a value in or higher than the idle speed range J to a value lower than the first threshold H1, the controller 25 starts the first assist control DA1. Therefore, when the rotation speed G decreases from a value in or higher than the idle speed range J to a value lower than the first threshold H1, the first assist control DA1 assists the rotation of the engine 22. Therefore, when the rotation speed G decreases from a value in or higher than the idle speed range J to a value lower than the first threshold H1, the engine unit 21 is comfortable for the driver.

The controller 25 ends the first assist control DA1 based on the detection result of the first sensor 23. Therefore, the timing at which the first assist control DA1 ends depends on the rotation speed G. Therefore, the first assist control DA1 ends at an appropriate timing. Therefore, the engine unit 21 is comfortable for the driver.

When the rotation speed G is greater than or equal to the third threshold H3, the controller 25 ends the first assist control DA1. The third threshold H3 is higher than the first threshold H1. Therefore, it is easy for the first assist control DA1 to end at an appropriate timing.

The idle speed range J has the upper limit JU. The third threshold H3 is less than or equal to the upper limit JU. Therefore, it is easy for the first assist control DA1 to end at an appropriate timing.

The third threshold H3 is greater than or equal to the lower limit JL. Therefore, it is easy for the first assist control DA1 to end at an appropriate timing.

As described above, the third threshold H3 is greater than or equal to the lower limit JL. Therefore, it is easy to control the rotation speed G to a value greater than or equal to the lower limit JL.

The straddled vehicle 1 includes the engine unit 21. As described above, in the range of the rotation speed G lower than the idle speed range J, the engine unit 21 is comfortable for the driver. Therefore, in the range of the rotation speed G lower than the idle speed range J, the straddled vehicle 1 is comfortable for the driver.

Regardless of the speed of the straddled vehicle 1, the controller 25 starts the first assist control DA1. Therefore, regardless of the speed of the straddled vehicle 1, in the range of the rotation speed G lower than the idle speed range J, the straddled vehicle 1 is comfortable for the driver.

Regardless of the acceleration of the straddled vehicle 1, the controller 25 starts the first assist control DA1. Therefore, regardless of the acceleration of the straddled vehicle 1, in the range of the rotation speed G lower than the idle speed range J, the straddled vehicle 1 is comfortable for the driver.

Regardless of the amount of operation of the accelerator provided in the straddled vehicle 1, the controller 25 starts the first assist control DA1. Therefore, regardless of the amount of operation of the accelerator, in the range of the rotation speed G lower than the idle speed range J, the straddled vehicle 1 is comfortable for the driver.

Regardless of the operation of the throttle device provided in the engine unit 21, the controller 25 starts the first assist control DA1. Therefore, regardless of the operation of the throttle device, in the range of the rotation speed G lower than the idle speed range J, the straddled vehicle 1 is comfortable for the driver.

Regardless of the speed of the straddled vehicle 1, the controller 25 ends the first assist control DA1. Therefore, regardless of the speed of the straddled vehicle 1, in the range of the rotation speed G lower than the idle speed range J, the straddled vehicle 1 is comfortable for the driver.

Regardless of the acceleration of the straddled vehicle 1, the controller 25 ends the first assist control DA1. Therefore, regardless of the acceleration of the straddled vehicle 1, in the range of the rotation speed G lower than the idle speed range J, the straddled vehicle 1 is comfortable for the driver.

Regardless of the amount of operation of the accelerator provided in the straddled vehicle 1, the controller 25 ends the first assist control DA1. Therefore, regardless of the amount of operation of the accelerator, in the range of the rotation speed G lower than the idle speed range J, the straddled vehicle 1 is comfortable for the driver.

Regardless of the operation of the throttle device provided in the engine unit 21, the controller 25 ends the first assist control DA1. Therefore, regardless of the operation of the throttle device, in the range of the rotation speed G lower than the idle speed range J, the straddled vehicle 1 is comfortable for the driver.

### 2. Second embodiment

### 2-1. Schematic configuration of straddled vehicle 1

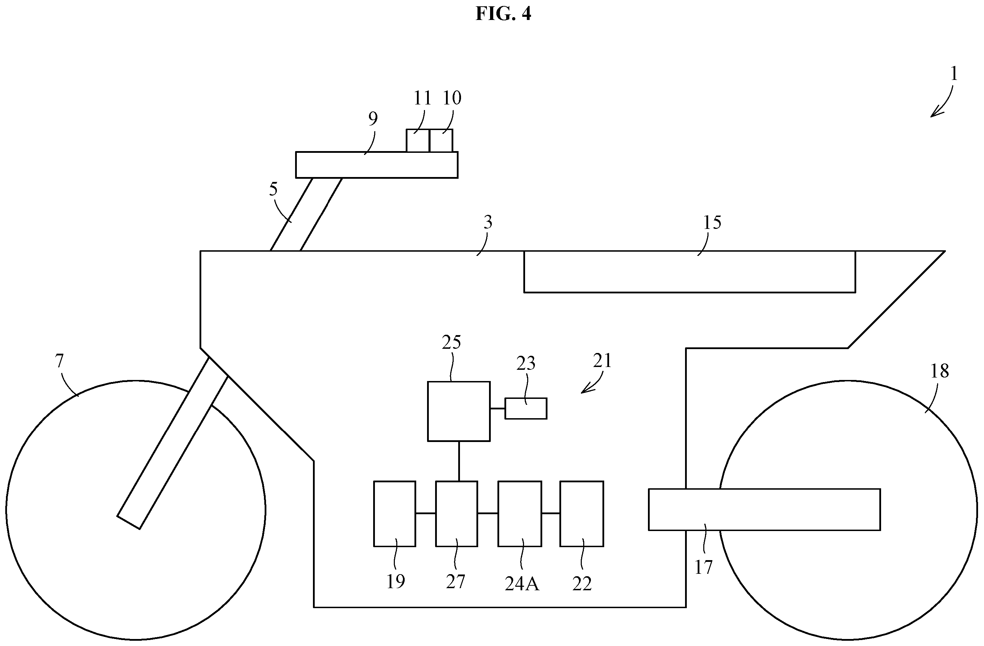

FIG. 4 is a side view of the straddled vehicle 1 according to the second embodiment. The straddled vehicle 1 is, for example, a motorcycle. The same components as those of the first embodiment are denoted by the same reference signs, and a detailed description thereof will be omitted.

The straddled vehicle 1 includes an accelerator 10. The accelerator 10 is attached to the handlebar 9. The driver of the straddled vehicle 1 operates the accelerator 10. When the amount of operation of the accelerator 10 increases, the speed of the straddled vehicle 1 increases.

The straddled vehicle 1 includes a second sensor 11. The second sensor 11 is attached to the accelerator 10. The second sensor 11 detects the amount of operation of the accelerator 10.

The straddled vehicle 1 includes a battery 19. The battery 19 stores electric power.

The battery 19 is classified as a rechargeable battery. The battery 19 can be charged, discharged, and recharged. The battery 19 can be recharged many times.

### 2-2. Schematic configuration of engine unit 21

The engine unit 21 includes a motor 24A. The motor 24A also serves as a generator. The motor 24A has a motor function and a generator function. Specifically, the motor 24A is configured to generate rotation power and generate electric power.

The motor 24A is an example of a motor of the present invention and is also an example of a generator of the present invention.

The motor 24A is one component. The motor 24A is integrated with a generator. The motor 24A constitutes a motor generator. In other words, the motor 24A is classified as a motor generator. The motor generator is also referred to as starter generator.

Hereinafter, the motor 24A is appropriately referred to as "motor generator 24A".

The motor generator 24A is configured to generate rotation power by electric power discharged from the battery 19. When the battery 19 discharges electric power to the motor generator 24A, the motor generator 24A generates rotation power. Specifically, the motor generator 24A converts the electric power discharged from the battery 19 into rotation power.

The motor generator 24A is configured to assist the rotation of the engine 22. When the motor generator 24A generates rotation power, the motor generator 24A outputs the rotation power to the engine 22.

The motor generator 24A is configured to generate power by the rotation power of the engine 22. When the engine 22 outputs rotation power to the motor generator 24A, the motor generator 24A generates electric power. Specifically, the motor generator 24A converts the rotation power output from the engine 22 into electric power.

The motor generator 24A is configured to charge the battery 19. When the motor generator 24A generates electric power, the motor generator 24A supplies electric power to the battery 19.

The engine unit 21 further includes a power controller 27. The power controller 27 is electrically connected to the battery 19. The power controller 27 is electrically connected to the motor generator 24A. The battery 19 and the motor generator 24A are electrically connected via the power controller 27. The power controller 27 transmits electric power from the battery 19 to the motor generator 24A. The power controller 27 transmits electric power from the motor generator 24A to the battery 19.

The power controller 27 controls the motor generator 24A.

Here, the state of the motor generator 24A that generates rotation power is referred to as "assist mode EA". The state of the motor generator 24A that generates electric power is referred to as "power generation mode EG". The power controller 27 switches the motor generator 24A between the assist mode EA and the power generation mode EG. For example, the power controller 27 switches the motor generator 24A between the assist mode EA and the power generation mode EG by adjusting the voltage applied to the motor generator 24A.

Furthermore, the power controller 27 may adjust the voltage applied to the battery 19. The power controller 27 may convert DC power into AC power. The power controller 27 may convert AC power into DC power. For example, the power controller 27 includes at least one of an inverter and a converter.

The controller 25 controls the power controller 27. The controller 25 controls the power controller 27, whereby the controller 25 controls the motor generator 24A.

The controller 25 performs the first assist control DA1. In the first assist control DA1, the controller 25 sets the motor generator 24A to the assist mode EA.

The controller 25 performs a power generation control DG. In the power generation control DG, the controller 25 sets the motor generator 24A to the power generation mode EG.

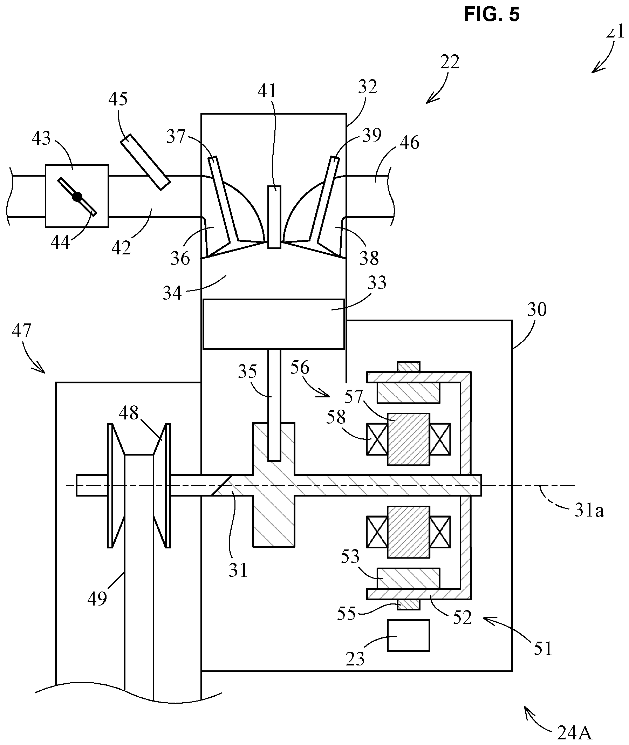

FIG. 5 is a partial cross-sectional view illustrating a configuration of the engine unit 21. The engine 22 is classified as, for example, a single cylinder. The engine 22 is classified as, for example, a 4-stroke engine.

The engine 22 includes a crankcase 30 and a crankshaft 31. The crankshaft 31 is provided in the crankcase 30. The crankshaft 31 is supported by the crankcase 30. The crankshaft 31 rotates with respect to the crankcase 30. The crankshaft 31 has an axis 31a. The crankshaft 31 extends in the direction of the axis 31a. The crankshaft 31 rotates about the axis 31a.

The crankshaft 31 outputs the rotation power of the engine 22. The rotation of the crankshaft 31 corresponds to the rotation of the engine 22. The axis 31a corresponds to the rotation axis of the engine 22.

The engine 22 includes a cylinder unit 32 and a piston 33. The cylinder unit 32 is connected to the crankcase 30. The piston 33 is provided in the cylinder unit 32. The piston 33 reciprocates with respect to the cylinder unit 32.

The cylinder unit 32 and the piston 33 form a combustion chamber 34. The combustion chamber 34 is a space in the engine 22. Air-fuel mixture combusts in the combustion chamber 34. The combustion of air-fuel mixture generates exhaust gas in the combustion chamber 34.

The engine 22 includes a connecting rod 35. The connecting rod 35 is connected to the piston 33. The connecting rod 35 is connected to the crankshaft 31. When the piston 33 reciprocates, the connecting rod 35 rotates the crankshaft 31.

The engine 22 includes an intake port 36. The intake port 36 is formed in the cylinder unit 32. The intake port 36 communicates with the combustion chamber 34. The intake port 36 supplies air-fuel mixture to the combustion chamber 34.

The engine 22 includes an intake valve 37. The intake valve 37 is provided in the intake port 36. The intake valve 37 opens and closes the intake port 36. When the intake valve 37 opens the intake port 36, the intake port 36 provides air-fuel mixture to the combustion chamber 34. When the intake valve 37 closes the intake port 36, the intake port 36 does not provide air-fuel mixture to the combustion chamber 34.

The engine 22 includes an exhaust port 38. The exhaust port 38 is formed in the cylinder unit 32. The exhaust port 38 communicates with the combustion chamber 34. The combustion chamber 34 exhausts exhaust gas to the exhaust port 38.

The engine 22 includes an exhaust valve 39. The exhaust valve 39 is provided in the exhaust port 38. The exhaust valve 39 opens and closes the exhaust port 38. When the exhaust valve 39 opens the exhaust port 38, the combustion chamber 34 exhausts exhaust gas to the exhaust port 38. When the exhaust valve 39 closes the exhaust port 38, the combustion chamber 34 does not exhaust exhaust gas to the exhaust port 38.

The engine unit 21 includes an ignition device 41. The ignition device 41 ignites the air-fuel mixture in the engine 22. The ignition device 41 is inserted into the combustion chamber 34. The ignition device 41 ignites the air-fuel mixture in the combustion chamber 34. When the air-fuel mixture is ignited, the air-fuel mixture combusts. The combustion of the air-fuel mixture starts at the ignition timing of the air-fuel mixture.

The engine unit 21 includes an intake pipe 42. The intake pipe 42 is connected to the engine 22. The intake pipe 42 is connected to the cylinder unit 32. The intake pipe 42 communicates with the intake port 36. The intake pipe 42 supplies air to the engine 22. The intake pipe 42 supplies air to the intake port 36.

The engine unit 21 includes a throttle device 43. The throttle device 43 supplies air to the engine 22. The throttle device 43 is provided on the intake pipe 42.

The throttle device 43 adjusts the amount of air flowing through the intake pipe 42. The amount of air flowing through the intake pipe 42 corresponds to the amount of air supplied to the engine 22. Therefore, the throttle device 43 adjusts the amount of air supplied to the engine 22. The amount of air supplied to the engine 22 is also referred to as intake amount of the engine 22.

The configuration of the throttle device 43 is illustrated. For example, the throttle device 43 includes a throttle valve 44. The throttle valve 44 opens and closes the intake pipe 42. When the throttle valve 44 opens the intake pipe 42, the throttle device 43 supplies air to the engine 22. When the throttle valve 44 closes the intake pipe 42, the throttle device 43 does not supply air to the engine 22. By changing the position of the throttle valve 44, the throttle device 43 adjusts the amount of air supplied to the engine 22.

The throttle device 43 is classified as, for example, an electronic control throttle.

The engine unit 21 includes a fuel injection device 45. The fuel injection device 45 supplies fuel to the engine 22. For example, the fuel injection device 45 is attached to the intake pipe 42. The fuel injection device 45 injects fuel into the intake pipe 42. Air and fuel form air-fuel mixture in the intake pipe 42.

The fuel injection device 45 adjusts the amount of fuel supplied to the engine 22. For example, by changing the fuel injection time, the fuel injection device 45 adjusts the amount of fuel supplied to the engine 22.

The engine 22 includes an exhaust pipe 46. The exhaust pipe 46 is connected to the engine 22. The exhaust pipe 46 is connected to the cylinder unit 32. The exhaust pipe 46 communicates with the exhaust port 38. The exhaust pipe 46 conveys exhaust gas.

The engine 22 includes a transmission 47. The transmission 47 is connected to the crankshaft 31. The transmission 47 is connected to a first end of the crankshaft 31, for example. The transmission 47 is, for example, a continuously variable transmission. The transmission 47 continuously changes a transmission ratio, for example.

The transmission 47 includes a primary pulley 48 and a belt 49. The primary pulley 48 is attached to one end of the crankshaft 31. The primary pulley 48 rotates integrally with the crankshaft 31. The primary pulley 48 rotates about the axis 31a. The belt 49 is hooked on the primary pulley 48. The belt 49 transmits the rotation power of the crankshaft 31.

The primary pulley 48 has an effective diameter. The effective diameter of the primary pulley 48 can be continuously changed. The belt 49 is hooked on the primary pulley 48 at the effective diameter.

The motor generator 24A is connected to the crankshaft 31. The motor generator 24A is connected to a second end of the crankshaft 31, for example.

The motor generator 24A is provided, for example, in the crankcase 30.

The motor generator 24A includes a rotor 51. The rotor 51 is fixed to the crankshaft 31. The rotor 51 is attached to the second end of the crankshaft 31, for example. The rotor 51 rotates integrally with the crankshaft 31. The rotor 51 rotates about the axis 31a.

The rotation axis of the rotor 51 corresponds to the rotation axis of the motor generator 24A. The rotation axis of the motor generator 24A is coaxial with the axis 31a. The rotation axis of the motor generator 24A is coaxial with the rotation axis of the engine 22.

The rotor 51 includes a rotor core 52 and a permanent magnet 53. The rotor core 52 is connected to the crankshaft 31. The permanent magnet 53 is attached to the rotor core 52.

The motor generator 24A includes a stator 56. The stator 56 is supported by, for example, the crankcase 30. The stator 56 is fixed to the crankcase 30.

The stator 56 includes a stator core 57 and a winding 58. The winding 58 is attached to the stator core 57. FIG. 5 illustrates the winding 58 in a simplified manner for convenience.

The rotation speed G of the engine 22 is equal to the rotation speed of the crankshaft 31, for example. The rotation speed G is equal to the rotation speed of the motor generator 24A, for example. The rotation speed G is equal to the rotation speed of the rotor 51, for example.

For example, the first sensor 23 directly detects the rotation speed of the motor generator 24A. The first sensor 23 directly detects the rotation speed of the rotor 51. The first sensor 23 indirectly detects the rotation speed G of the engine 22.

The rotor 51 includes a plurality of protrusions 55. The protrusions 55 are fixed to the rotor 51. The protrusions 55 are attached to the rotor core 52.

The first sensor 23 detects the protrusions 55. Accordingly, the first sensor 23 detects the rotation speed G.

The first sensor 23 is provided, for example, in the crankcase 30.

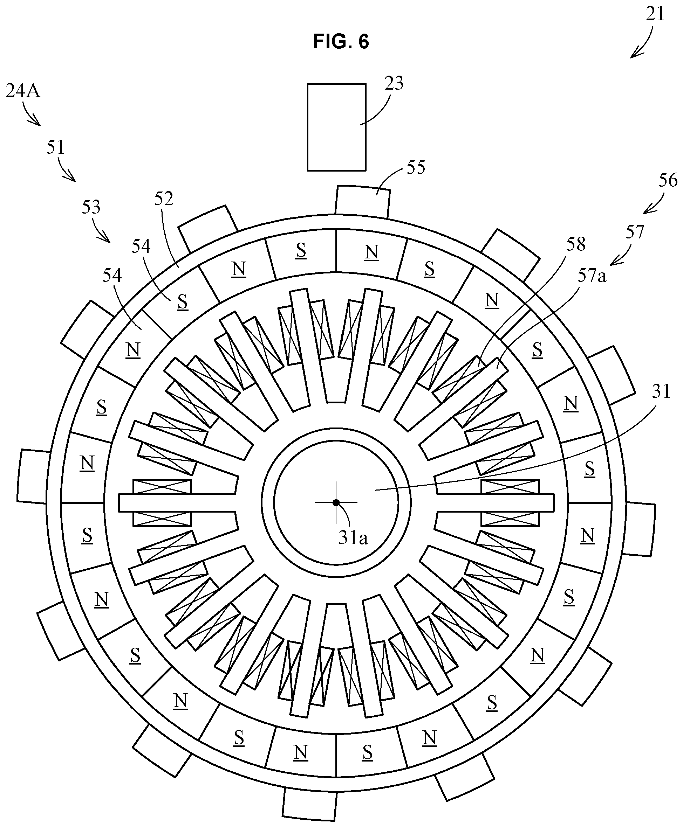

FIG. 6 is a diagram of the motor generator 24A viewed from the direction of the axis 31a. The stator 56 is disposed outward of the crankshaft 31, for example. The rotor 51 is disposed outward of the stator 56. The rotor 51 is classified as an outer rotor. The stator 56 is classified as an inner stator. The crankshaft 31 and the rotor 51 rotate with respect to the stator 56.

The rotor core 52 has an annular shape centered on the axis 31a. Each of the protrusions 55 is disposed outward of the rotor core 52. The plurality of protrusions 55 is arranged at intervals in the circumferential direction around the axis 31a.

The first sensor 23 is disposed outward of the rotor 51. The first sensor 23 is disposed outward of the protrusions 55.

The permanent magnet 53 is disposed inward of the rotor core 52. The permanent magnet 53 has an annular shape centered on the axis 31a. The permanent magnet 53 forms a magnetic pole 54. The magnetic pole 54 includes a plurality of N poles and a plurality of S poles. The N poles and the S poles are alternately arranged in the circumferential direction around the axis 31a.

The stator core 57 is disposed inward of the permanent magnet 53. The stator core 57 includes a plurality of teeth 57a. Each of the teeth 57a extends radially from the axis 31a. The plurality of teeth 57a is arranged at intervals in the circumferential direction around the axis 31a. The winding 58 is wound around each of the teeth 57a.

The motor generator 24A is, for example, a three-phase motor. Although not illustrated, the winding 58 includes a first-phase winding, a second-phase winding, and a third-phase winding. The first phase, the second phase, and the third phase are also referred to as U phase, V phase, and W phase, respectively.

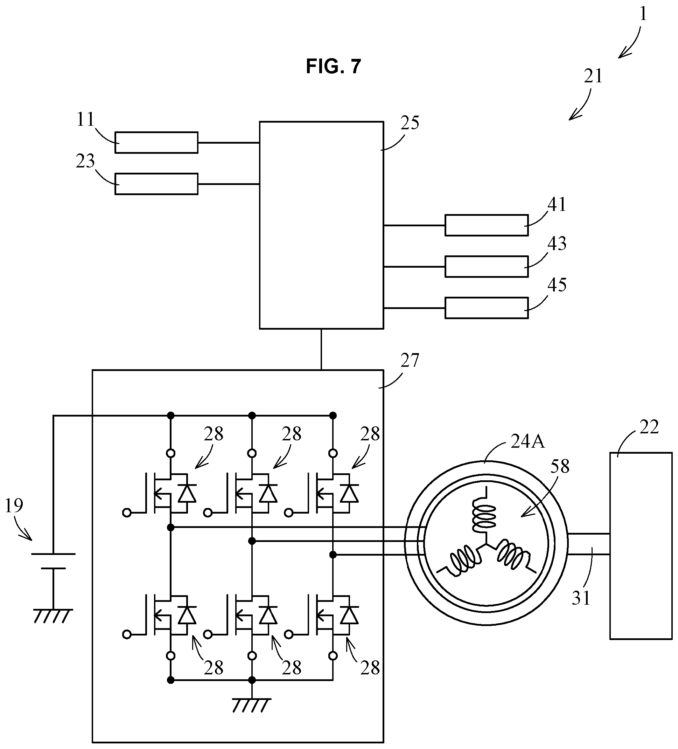

FIG. 7 is a block diagram illustrating an electrical configuration of the engine unit 21. For example, the power controller 27 includes a plurality of (for example, 6) switching units 28. The switching units 28 are connected to the battery 19. The switching units 28 are connected to the winding 58. The switching units 28 are connected to the first-phase winding, the second-phase winding, and the third-phase winding, respectively. The switching units 28 control conduction/interruption of a current between the battery 19 and the winding 58, respectively.

The switching units 28 constitute, for example, a bridge inverter. The switching units 28 constitute, for example, a three-phase bridge inverter. More specifically, the switching units 28 constitute three half bridges. Each of the half bridges includes two switching units 28 connected in series. The three half bridges are connected in parallel to the battery 19. The half bridges are connected to the first-phase winding, the second-phase winding, and the third-phase winding, respectively.

The switching unit 28 includes, for example, a semiconductor element. The switching unit 28 includes, for example, at least one of a field effect transistor (FET), a thyristor, and an insulated gate bipolar transistor (IGBT).

The controller 25 acquires a detection result of the second sensor 11.

The controller 25 acquires the detection result of the first sensor 23.

The controller 25 controls the ignition device 41. The controller 25 controls the throttle device 43. The controller 25 controls the fuel injection device 45.

For example, the controller 25 controls the throttle device 43 based on the detection result of the second sensor 11.

For example, the controller 25 controls the ignition device 41, the throttle device 43, and the fuel injection device 45 based on the detection result of the first sensor 23.

### 2-3. Operation example of engine unit 21 of second embodiment

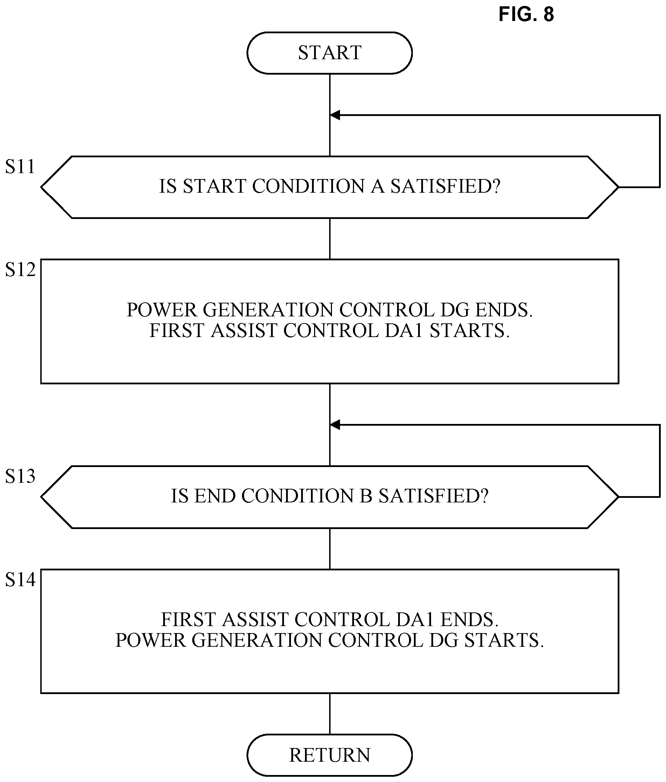

FIG. 8 is a flowchart illustrating a procedure of an operation example of the engine unit 21 of the second embodiment. In the following operation example, it is assumed that the engine 22 is rotating. It is assumed that the engine 22 is not starting. It is assumed that the engine 22 has already completed starting.

### Step S11: Is the start condition A satisfied?

The controller 25 determines whether the start condition A is satisfied. When the start condition A is satisfied, the process proceeds to step S12. Otherwise, the processing in step S11 is performed again.

When the controller 25 performs the processing of step S11, the controller 25 performs the power generation control DG.

Step S12: The power generation control DG ends. The first assist control DA1 starts.

The controller 25 ends the power generation control DG. The controller 25 starts the first assist control DA1.

### Step S13: Is the end condition B satisfied?

The controller 25 determines whether the end condition B is satisfied. When the end condition B is satisfied, the process proceeds to step S14. Otherwise, the processing in step S13 is performed again.

Step S14: The first assist control DA1 ends. The power generation control DG starts.

The controller 25 ends the first assist control DA1. The controller 25 starts the power generation control DG.

Here, the start condition A depends on the rotation speed G. Therefore, the controller 25 starts the first assist control DA1 based on the detection result of the first sensor 23.

The end condition B depends on the rotation speed G. Therefore, the controller 25 ends the first assist control DA1 based on the detection result of the first sensor 23.

For example, the end condition B depends only on the rotation speed G. Therefore, the controller 25 ends the first assist control DA1 based only on the detection result of the first sensor 23.

For example, the end condition B depends on a first amount K. The first amount K is defined by the rotation speed G. The first amount K is obtained from the detection result of the first sensor 23. Specifically, the first amount K is an increase in the rotation speed G due to the combustion of the engine 22. More specifically, the first amount K is an increase in the rotation speed G due to one combustion event of the engine 22. The first amount K is also referred to as "increase amount Δne of the rotation speed G".

The controller 22 acquires the first amount K based on the detection result of the first sensor 23. The controller 25 determines whether the end condition B is satisfied based on the first amount K. Then, the controller 25 ends the first assist control DA1 based on the first amount K.

For example, the end condition B depends only on the first amount K. Therefore, the controller 25 ends the first assist control DA1 based on only the first amount K.

Specific examples of the start condition A will be described. The start condition A includes a second start condition A2 and a third start condition A3 in addition to the first start condition A1.

The first start condition A1 is that "the rotation speed G is lower than the first threshold H1".

The second start condition A2 is that "the rotation speed G is higher than the second threshold H2".

The third start condition A3 is that "a latest power generation period FGM is longer than or equal to a first reference time F1".

Here, the "power generation period FG" is a period during which the motor generator 24A generates electric power. In other words, the "power generation period FG" is a period during which the power generation control DG is executed.

The "latest power generation period FGM" is the power generation period FG after a latest first assist control DA1M ends. Specifically, the "latest power generation period FG" is a period during which the motor generator 24A generates electric power after the latest first assist control DA1M ends. The "latest first assist control DA1M" can be rephrased as the last performed first assist control DA1.

The "latest power generation period FGM" means, for example, the power generation period FG currently in progress.

When all of the first start condition A1, the second start condition A2, and the third start condition A3 are satisfied, the start condition A is satisfied. When at least one of the first start condition A1, the second start condition A2, and the third start condition A3 is not satisfied, the start condition A is not satisfied.

A specific example of the end condition B will be described. For example, the end condition B includes a second end condition B2.

The second end condition B2 is that "the first amount K is greater than or equal to a reference amount L".

When the second end condition B2 is satisfied, the end condition B is satisfied. When the second end condition B2 is not satisfied, the end condition B is not satisfied.

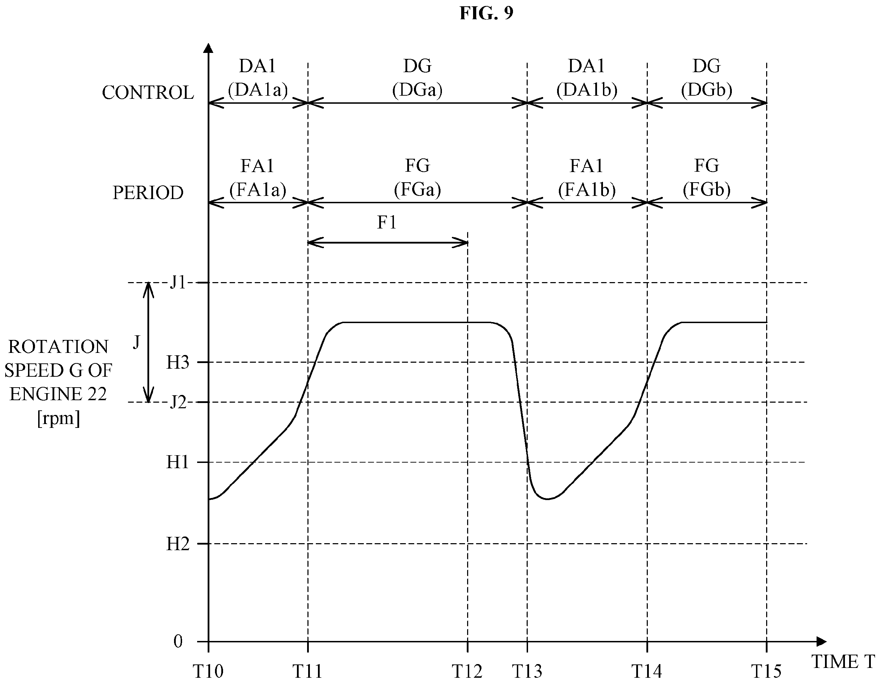

FIG. 9 is a timing chart illustrating an operation example of the engine unit 21 of the second embodiment. The horizontal axis represents time T. The vertical axis represents the control executed by the controller 25, the period during which the control by the controller 25 is executed, and the rotation speed G.

The second threshold H2 is set in advance.

The second threshold H2 is lower than the first threshold H1.

The second threshold H2 is higher than 0.

The second threshold H2 is higher than half the lower limit JL.

The second threshold H2 is higher than half the upper limit JU.

The second threshold H2 is higher than 600 rpm, for example. The second threshold H2 is higher than 700 rpm, for example. The second threshold H2 is higher than 800 rpm, for example. The second threshold H2 is higher than 900 rpm, for example.

The first reference time F1 is set in advance.

The amount of electric power generated by the motor generator 24A in the first reference time F1 is larger than the amount of electric power consumed in one first assist control DA1. In other words, the amount of electric power consumed in one first assist control DA1 is smaller than the amount of electric power generated by the motor generator 24A in the first reference time F1.

For example, the first reference time F1 is longer than the first assist period FA1.

For example, the first reference time F1 is 6 seconds.

From time T10 to time T15, the rotation speed G is higher than 0.

A period from time T10 to time T11 and a period from time T13 to time T14 are the first assist period FA1. In the first assist period FA1, the controller 25 performs the first assist control DA1.

The operation of the engine unit 21 in the first assist period FA1 will be described.

In the first assist period FA1, the controller 25 controls the ignition device 41, the throttle device 43, the fuel injection device 45, and the motor generator 24A based on the detection result of the first sensor 23. In the first assist period FA1, the controller 25 controls the rotation speed G by the ignition device 41, the throttle device 43, the fuel injection device 45, and the motor generator 24A.

In the first assist period FA1, the controller 25 controls the ignition device 41 to ignite the air-fuel mixture in the engine 22.

For example, in the first assist period FA1, the controller 25 controls the ignition device 41 to adjust the ignition timing of the air-fuel mixture in the engine 22.

In the first assist period FA1, the controller 25 controls the throttle device 43 to supply air to the engine 22.

For example, in the first assist period FA1, the controller 25 controls the throttle device 43 to adjust the amount of air supplied to the engine 22.

In the first assist period FA1, the controller 25 controls the fuel injection device 45 to supply fuel to the engine 22.

In the first assist period FA1, the controller 25 controls the fuel injection device 45 to adjust the amount of fuel supplied to the engine 22.

As described above, in the first assist period FA1, the controller 25 performs the first assist control DA1. In the first assist control DA1, the controller 25 keeps the motor generator 24A in the assist mode EA. In the first assist control DA1, the controller 25 causes the battery 19 to supply electric power to the motor generator 24A. In the first assist control DA1, the controller 25 causes the motor generator 24A to convert electric power into rotation power. In the first assist control DA1, the controller 25 causes the motor generator 24A to output rotation power to the engine 22. In the first assist control DA1, the controller 25 causes the motor generator 24A to assist the rotation of the engine 22.

In the first assist control DA1, the motor generator 24A assists the rotation of the engine 22.

In the first assist period FA1, the motor generator 24A consumes electric power. In the first assist period FA1, the motor generator 24A does not generate electric power.

Therefore, in the first assist period FA1, the balance of electric power decreases.

Here, the "balance of electric power" is, for example, a value obtained by subtracting the amount of electric power consumed by the motor generator 24A from the amount of electric power generated by the motor generator 24A. In the first assist period FA1, the amount of electric power consumed by the motor generator 24A increases. When the amount of electric power consumed by the motor generator 24A increases, the balance of electric power decreases.

In the first assist period FA1, the battery 19 is discharged. In the first assist period FA1, the battery 19 is not charged.

Therefore, in the first assist period FA1, the balance of electric power of the battery 19 decreases.

Here, the "balance of electric power of the battery 19" is, for example, a value obtained by subtracting the amount of electric power discharged from the battery 19 from the amount of electric power charged to the battery 19. In the first assist period FA1, amount of electric power discharged from the battery 19 increases. When the amount of electric power discharged from the battery 19 increases, the balance of electric power of the battery 19 decreases.

A period from time T11 to time T13 and a period from time T14 to time T15 are the power generation period FG.

In the power generation period FG, the controller 25 performs the power generation control DG.

The operation of the engine unit 21 in the power generation period FG will be described.

In the power generation period FG, the controller 25 controls the ignition device 41, the throttle device 43, and the fuel injection device 45 based on the detection result of the first sensor 23 and the detection result of the second sensor 11. In the power generation period FG, the controller 25 controls the rotation speed G by the ignition device 41, the throttle device 43, and the fuel injection device 45.

As described above, in the power generation period FG, the controller 25 performs the power generation control DG. In the power generation control DG, the controller 25 keeps the motor generator 24A in the power generation mode EG. In the power generation control DG, the controller 25 causes the motor generator 24A to convert the rotation power of the engine 22 into electric power. In the power generation control DG, the controller 25 causes the motor generator 24A to supply electric power to the battery 19. In the power generation control DG, the controller 25 causes the motor generator 24A to charge the battery 19.

In the power generation period FG, the motor generator 24A generates electric power. In the power generation period FG, the motor generator 24A does not assist the rotation of the engine 22.

In the power generation period FG, the amount of electric power generated by the motor generator 24A increases. When the amount of electric power generated by the motor generator 24A increases, the balance of electric power increases. Therefore, in the power generation period FG, the balance of electric power increases.

In the power generation period FG, the battery 19 is charged. In the power generation period FG, the battery 19 is not discharged.

In the power generation period FG, the amount of electric power charged to the battery 19 increases. When the amount of electric power charged to the battery 19 increases, the balance of electric power of the battery 19 increases. Therefore, in the power generation period FG, the balance of electric power of the battery 19 increases.

In the power generation period FG, the controller 25 repeats the processing of step S11.

Here, the first assist period FA1 from time T10 to time T11 is appropriately referred to as "first assist period FA1a". The first assist control DA1 in the first assist period FA1a is appropriately referred to as "first assist control DA1a". The first assist period FA1 from time T13 to time T14 is appropriately referred to as "first assist period FA1b". The first assist control DA1 in the first assist period FA1b is appropriately referred to as "first assist control DA1b".

The power generation period FG from time T11 to time T13 is appropriately referred to as "power generation period FGa". The power generation control DG in the power generation period FGa is appropriately referred to as "power generation control DGa". The power generation period FG from time T14 to time T15 is appropriately referred to as "power generation period FGb". The power generation control DG in the power generation period FGb is appropriately referred to as "power generation control DGb".

In the power generation period FGa, the controller 25 performs the processing of step S11 as follows.

From time T11 to time T13, the controller 25 acquires the rotation speed G based on the detection result of the first sensor 23.

From time T11 to time T13, the rotation speed G is higher than the first threshold H1. Therefore, from time T11 to time T13, the first condition A1 is not satisfied. At time T13, the rotation speed G is lower than the first threshold H1. Therefore, at time T13, the first start condition A1 is satisfied.

From time T11 to time T13, the rotation speed G is higher than the second threshold H2. Therefore, from time T11 to time T13, the second start condition A2 is satisfied.

In the period from time T11 to time T13, the controller 25 reagards the power generation period FGa as the "latest power generation period FGM". In the period from time T11 to time T13, the controller 25 reagards the first assist control DA1a as the "latest first assist control DA1M".

From time T11 to time T13, the controller 25 measures the latest power generation period FGM.

The period from time T11 to time T12 is equal to the first reference time F1. From time T11 to time T12, the latest power generation period FGM is shorter than the first reference time F1. Therefore, from time T11 to time T12, the third start condition A3 is not satisfied. From time T12 to time T13, the latest power generation period FGM is longer than or equal to the first reference time F1. Therefore, from time T12 to time T13, the third start condition A3 is satisfied.

From time T11 to time T13, at least one of the first start condition A1, the second start condition A2, and the third start condition A3 is not satisfied. Therefore, from time T11 to time T13, the start condition A is not satisfied. Therefore, from time T11 to time T13, the controller 25 does not end the power generation control DGa. From time T11 to time T13, the controller 25 does not start the first assist control DA1b.

At time T13, all of the first start condition A1, the second start condition A2, and the third start condition A3 are satisfied. Therefore, at time T13, the start condition A is satisfied. Therefore, at time T13, the controller 25 ends the power generation control DGa. At time T13, the controller 25 starts the first assist control DA1b.

In the first assist period FA1, the controller 25 repeats the processing of step S13. In the first assist period FA1b, the controller 25 performs the processing of step S13 as follows.

The controller 25 acquires the first amount K based on the detection result of the first sensor 23.

Although FIG. 9 does not clearly illustrate the first amount K, from time T13 to time T14, the first amount K is smaller than the reference amount L. Therefore, from time T13 to time T14, the second end condition B2 is not satisfied. Therefore, from time T13 to time T14, the end condition B is not satisfied. Therefore, from time T13 to time T14, the controller 25 does not end the first assist control DA1b. From time T13 to time T14, the controller 25 does not start the power generation control DGb.

At time T14, the first amount K is greater than or equal to the reference amount L. Therefore, at time T14, the second end condition B2 is satisfied. Therefore, at time T14, the end condition B is satisfied. Therefore, at time T14, the controller 25 ends the first assist control DA1b. At time T14, the controller 25 starts the power generation control DGb.

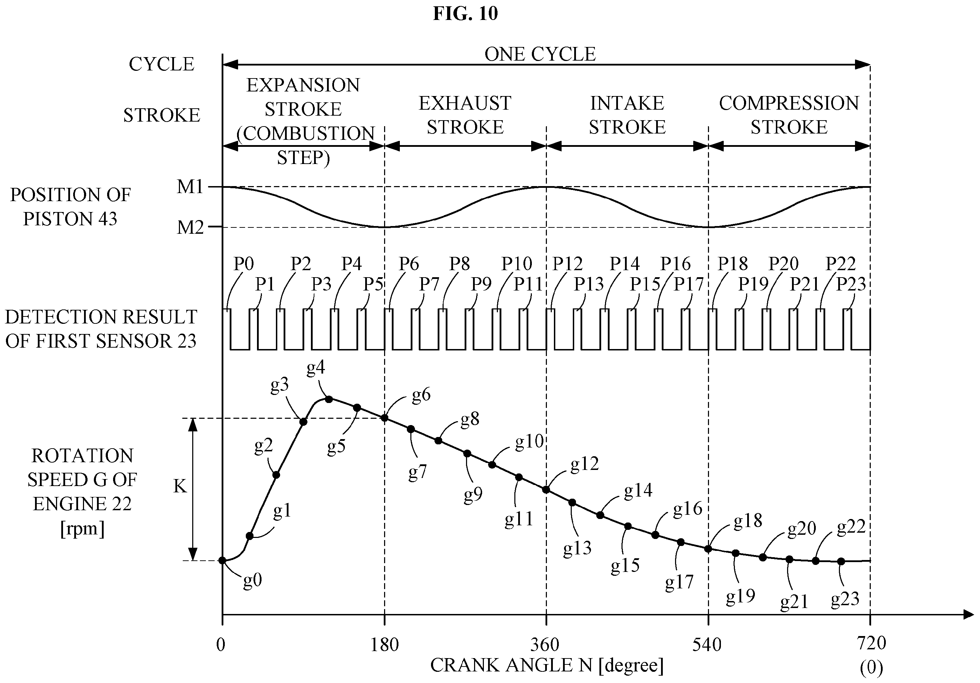

FIG. 10 is a graph illustrating the first amount K. The horizontal axis represents a crank angle N. The vertical axis represents a cycle, a stroke, a position of the piston 33, the detection result of the first sensor 23, and the rotation speed G.

The crank angle N is an angle of the crankshaft 31 about the axis 31a. When the engine 22 performs one cycle, the crankshaft 31 rotates twice about the axis 31a. In one cycle, the crank angle N increases by 720 degrees.

The engine 22 repeats the cycle. The engine 22 combusts in each cycle. The engine 22 combusts once in each cycle. The cycle is also referred to as combustion cycle.

One cycle includes four strokes. Specifically, one cycle includes an expansion stroke, an exhaust stroke, an intake stroke, and a compression stroke. For example, in the expansion stroke, the crank angle N increases from 0 degrees to 180 degrees. In the exhaust stroke, the crank angle N increases from 180 degrees to 360 degrees. In the intake stroke, the crank angle N increases from 360 degrees to 540 degrees. In the compression stroke, the crank angle N increases from 540 degrees to 720 degrees.

In the expansion stroke, the engine combusts. The expansion stroke is also referred to as combustion step. In the expansion stroke, the ignition device 41 ignites the air-fuel mixture in the combustion chamber 34. In the expansion stroke, the air-fuel mixture combusts and expands.

The exhaust stroke is performed after the expansion stroke. In the exhaust stroke, the exhaust gas is discharged from the combustion chamber 34 to the exhaust pipe 46.

The intake stroke is executed after the exhaust stroke. In the intake stroke, the air-fuel mixture is drawn into the combustion chamber 34. The air-fuel mixture includes air supplied by the throttle device 43 and fuel supplied by the fuel injection device 45.

The compression stroke is executed after the intake stroke. In the compression stroke, the air-fuel mixture in the combustion chamber 34 is compressed by the piston 33.

In one cycle, the piston 33 reciprocates twice between a top dead center M1 and a bottom dead center M2.

In the expansion stroke, the piston 33 moves from the top dead center M1 to the bottom dead center M2. In the exhaust stroke, the piston 33 moves from the bottom dead center M2 to the top dead center M1. In the intake stroke, the piston 33 moves from the top dead center M1 to the bottom dead center M2. In the compression stroke, the piston 33 moves from the bottom dead center M2 to the top dead center M1.

The detection result of the first sensor 23 is, for example, a plurality of signals P0, P1 ... and P23. In one cycle, the first sensor 23 generates the plurality of signals P0, P1 ... and P23. Specifically, when the crankshaft 31 rotates twice about the axis 31a, the first sensor 23 generates the plurality of signals P0, P1 ... and P23.

When the signals P0, P1 ... and P23 are not distinguished, they are appropriately referred to as "signal P". When the first sensor 23 detects one protrusion 55, the first sensor 23 generates one signal P. The signal P is, for example, a pulse signal. Each signal P is associated with a time.

The rotation speed G is obtained based on the signal P.

The rotation speed G includes a plurality of instantaneous values g0, g1 ... g23.

All of the instantaneous values g0, g1 ... g23 are included in one cycle. The plurality of instantaneous values g0, g1 ... g23 represents changes in the rotation speed G in one cycle.

When the instantaneous values g0, g1 ... and g23 are not distinguished, they are appropriately referred to as "instantaneous value g". Each instantaneous value g is obtained based on the signal P. For example, the instantaneous value g6 is obtained based on at least two of the signals P5, P6, and P7.

For example, the instantaneous value g0 indicates the rotation speed G at the moment when the combustion of the engine 22 starts. The instantaneous value g0 indicates the rotation speed G at the moment when the expansion stroke starts. Hereinafter, the instantaneous value g0 is referred to as "first instantaneous value g0".

For example, the instantaneous value g6 indicates the rotation speed G at the moment when the combustion of the engine 22 ends. The instantaneous value g6 indicates the rotation speed G at the moment when the expansion stroke ends. Hereinafter, the instantaneous value g6 is referred to as "second instantaneous value g6".

For example, the first amount K is an increase amount from the first instantaneous value g0 to the second instantaneous value g6. For example, the first amount K is a difference between the first instantaneous value g0 and the second instantaneous value g6. When the second instantaneous value g6 is higher than the instantaneous value g0, the first amount K is positive. When the second instantaneous value g6 is lower than the instantaneous value g0, the first amount K is negative.

The first instantaneous value g0 is obtained in each cycle. The second instantaneous value g6 is obtained in each cycle. The first amount K is obtained in each cycle.

For example, when the first amount K is smaller than the reference amount L, it is not estimated that the engine 22 is combusting properly. When the first amount K is smaller than the reference amount L, it is not estimated that the engine 22 is combusting regularly.

For example, when the first amount K is greater than or equal to the reference amount L, it is estimated that the engine 22 is combusting properly. When the first amount K is greater than or equal to the reference amount L, it is estimated that the engine 22 is combusting regularly.

As described above, in FIG. 9, from time T13 to time T14, the first amount K is smaller than the reference amount L. In FIG. 9, at time T14, the first amount K is greater than or equal to the reference amount L.

A case where the controller 25 starts the first assist control DA1 and a case where the controller 25 does not start the first assist control DA1 are listed below.

When the rotation speed G is lower than the first threshold H1, the rotation speed G is higher than the second threshold H2, and the latest power generation period FGM is longer than or equal to the first reference time F1, the controller 25 starts the first assist control DA1.

When the rotation speed G is greater than or equal to the first threshold H1, the controller 25 does not start the first assist control DA1.

When the rotation speed G is less than or equal to the second threshold H2, the controller 25 does not start the first assist control DA1. For example, even in a case where the rotation speed G is lower than the first threshold, the controller 25 does not start the first assist control DA1 when the rotation speed G is less than or equal to the second threshold H2.

For example, when the rotation speed G is lower than the first threshold H1 and the rotation speed G is higher than the second threshold H2, the controller 25 starts the first assist control DA1.

The controller 25 can start the first assist control DA1 only when the rotation speed G is lower than the first threshold H1 and the rotation speed G is higher than the second threshold H2.

When the latest power generation period FGM is shorter than the first reference time F1, the controller 25 does not start the first assist control DA1. Even in a case where the rotation speed G is lower than the first threshold H1, the controller 25 does not start the first assist control DA1 until the latest power generation period FGM becomes longer than or equal to the first reference time F1.

For example, when the rotation speed G is lower than the first threshold H1 and the latest power generation period FGM is longer than or equal to the first reference time F1, the controller 25 starts the first assist control DA1.

A case where the controller 25 ends the first assist control DA1 and a case where the controller 25 does not end the first assist control DA1 are listed below.

When the first amount K is greater than or equal to the reference amount L, the controller 25 ends the first assist control DA1. In other words, the controller 25 ends the first assist control DA1 on condition that the first amount K is greater than or equal to the reference amount L.

When the first amount K is smaller than the reference amount L, the controller 25 does not end the first assist control DA1.

### 2-4. Effects of second embodiment

In the second embodiment, the same effects as those of the first embodiment are also obtained. For example, in the range of the rotation speed G lower than the idle speed range J, the engine unit 21 is comfortable for the driver. In the range of the rotation speed G lower than the idle speed range J, the straddled vehicle 1 is comfortable for the driver. Further, in the second embodiment, the following effects are obtained.

When the rotation speed G is lower than the first threshold H1 and higher than the second threshold H2, the controller 25 starts the first assist control DA1. The second threshold H2 is lower than the first threshold H1 and higher than 0. Therefore, when the rotation speed G is lower than the idle speed range J and higher than 0, the first assist control DA1 starts. Therefore, in the range of the rotation speed G lower than the idle speed range J and higher than 0, the first assist control DA1 assists the rotation of the engine 22. Therefore, in the range of the rotation speed G lower than the idle speed range J and higher than 0, the engine unit 21 is comfortable for the driver. In other words, when the engine 22 rotates in the range of the rotation speed G lower than the idle speed range J, the engine unit 21 is comfortable for the driver.

When the rotation speed G is less than or equal to the second threshold H2, the controller 25 does not start the first assist control DA1. Therefore, when the rotation speed G is 0, the first assist control DA1 does not start. That is, the first assist control DA1 focuses on the range of the rotation speed G higher than 0 and lower than the idle speed range J. Therefore, in the range of the rotation speed G lower than the idle speed range J and higher than 0, the first assist control DA1 effectively assists the rotation of the engine 22. Therefore, in the range of the rotation speed G lower than the idle speed range J and higher than 0, it is easy for the first assist control DA1 to appropriately control the rotation speed G. In the range of the rotation speed G lower than the idle speed range J and higher than 0, it is easy for the first assist control DA1 to improve the comfort of the engine unit 21 for the driver.

The controller 25 can start the first assist control DA1 only when the rotation speed G is lower than the first threshold H1 and higher than the second threshold H2. Therefore, in the range of the rotation speed G lower than the idle speed range J and higher than 0, the first assist control DA1 effectively assists the rotation of the engine 22. Therefore, in the range of the rotation speed G lower than the idle speed range J and higher than 0, it is easy for the first assist control DA1 to appropriately control the rotation speed G. In the range of the rotation speed G lower than the idle speed range J and higher than 0, it is easy for the first assist control DA1 to improve the comfort of the engine unit 21 for the driver.

The second threshold H2 is higher than half the lower limit JL. Therefore, when the rotation speed G is lower than the idle speed range J and higher than half the lower limit JL, the controller 25 starts the first assist control DA1. Therefore, in the range of the rotation speed G lower than the idle speed range J and higher than half the lower limit, the first assist control DA1 assists the rotation of the engine 22. Therefore, in the range of the rotation speed G lower than the idle speed range J and higher than half the lower limit, the engine unit 21 is comfortable for the driver.

The second threshold H2 is higher than half the upper limit JU. Therefore, when the rotation speed G is lower than the idle speed range J and higher than half the upper limit JU, the controller 25 starts the first assist control DA1. Therefore, in the range of the rotation speed G lower than the idle speed range J and higher than half the upper limit JU, the first assist control DA1 assists the rotation of the engine 22. Therefore, in the range of the rotation speed G lower than the idle speed range J and higher than half the upper limit JU, the engine unit 21 is comfortable for the driver.

The straddled vehicle 1 includes the motor generator 24A. The motor generator 24A is configured to generate power by the rotation of the engine 22. Even in a case where the rotation speed G is lower than the first threshold H1, the controller 25 does not start the first assist control DA1 until the latest power generation period FGM becomes longer than or equal to the first reference time F1. Therefore, when the latest power generation period FGM is shorter than the first reference time F1, the controller 25 does not start the first assist control DA1. Therefore, the motor generator 24A appropriately generates power in the latest power generation period FGM. Therefore, when the first assist controls DA1a and DA1b are executed, the balance of electric power is not continuously reduced. For example, after the first assist control DA1a ends and before the first assist control DA1b starts, the power generation control DGa is performed. Therefore, after the first assist control DA1a ends and before the first assist control DA1b starts, the balance of electric power increases.

When the rotation speed G is lower than the first threshold H1 and the latest power generation period FGM is longer than or equal to the first reference time F1, the controller 25 starts the first assist control DA1. Therefore, the motor generator 24A generates a sufficient amount of electric power in the latest power generation period FGM. A plurality of first assist controls DA1 is executed at intervals longer than or equal to the first reference time F1.

The amount of electric power consumed in one first assist control DA1 is smaller than the amount of electric power generated by the motor generator 24A in the first reference time F1. Therefore, the motor generator 24A generates a sufficient amount of electric power in the latest power generation period FGM.

The motor generator 24A is configured to generate rotation power by the electric power discharged from the battery 19. The motor generator 24A is configured to charge the battery 19. Therefore, it is easy for the motor generator 24A to generate rotation power. Therefore, it is easy for the motor generator 24A to rotate the engine 22.

In the first assist control DA1, the battery 19 discharges to the motor generator 24A. In the power generation period, the battery 19 is charged by the motor generator 24A. As described above, the controller 25 does not start the first assist control DA1 until the latest power generation period FGM becomes longer than or equal to the first reference time F1. Therefore, when two first assist controls DA1 are executed, the balance of electric power of the battery 19 is not continuously reduced. For example, after the first assist control DA1a ends and before the first assist control DA1b starts, the power generation control DGa is performed. Therefore, after the first assist control DA1a ends and before the first assist control DA1b starts, the balance of electric power of the battery 19 increases.

The motor generator 24A also serves as a generator. Therefore, it is easy to downsize the whole of the motor and generator.

The motor generator 24A is integrated with the generator. Therefore, it is easy to downsize the whole of the motor and generator.

The controller 25 acquires the first amount K based on the detection result of the first sensor 23. The controller 25 ends the first assist control DA1 based on the first amount K. Therefore, it is easy for the first assist control DA1 to end at an appropriate timing.

When the first amount K is greater than or equal to the reference amount L, the controller 25 ends the first assist control DA1. Therefore, it is easy for the first assist control DA1 to end at an appropriate timing.

The rotation speed G includes the first instantaneous value g0 and the second instantaneous value g6. The first instantaneous value g0 is the rotation speed G at the moment when the combustion of the engine 22 starts. The second instantaneous value g6 is the rotation speed G at the moment when the combustion of the engine 22 ends. The first amount K is an increase amount from the first instantaneous value g0 to the second instantaneous value g6. Therefore, it is easy to acquire the first amount K.

The engine 22 repeats the cycle. The engine 22 combusts in each cycle. The first instantaneous value g0 and the second instantaneous value g6 are obtained during each cycle. Therefore, it is easy to acquire the first amount K in each cycle.

The engine unit 21 includes the fuel injection device 45. In the first assist period FA1, the controller 25 controls the fuel injection device 45 to supply fuel to the engine 22. Therefore, in the first assist period FA1, the controller 25 controls the fuel injection device 45 to rotate the engine 22. Therefore, in the first assist period FA1, the controller 25 causes the fuel injection device 45 to rotate the engine 22 and causes the motor generator 24A to assist the rotation of the engine 22. Therefore, in the first assist period FA1, the controller 25 more appropriately controls the rotation speed G.

In the first assist period FA1, the controller 25 controls the fuel injection device 45 to adjust the amount of fuel supplied to the engine 22. Therefore, it is easy for the controller 25 to more appropriately control the rotation speed G in the first assist period FA1.

The engine unit 21 includes the throttle device 43. In the first assist period FA1, the controller 25 controls the throttle device 43 to supply air to the engine 22. Therefore, in the first assist period FA1, the controller 25 controls the throttle device to rotate the engine 22. Therefore, in the first assist period FA1, the controller 25 causes the throttle device 43 to rotate the engine 22 and causes the motor generator 24A to assist the rotation of the engine 22. Therefore, in the first assist period FA1, the controller 25 more appropriately controls the rotation speed G.

In the first assist period FA1, the controller 25 controls the throttle device 43 to adjust the amount of air supplied to the engine 22. Therefore, it is easy for the controller 25 to more appropriately control the rotation speed G in the first assist period FA1.

The engine unit 21 includes the ignition device 41. In the first assist period FA1, the controller 25 controls the ignition device 41 to ignite the air-fuel mixture in the engine 22. Therefore, in the first assist period FA1, the controller 25 controls the ignition device 41 to rotate the engine 22. Therefore, in the first assist period FA1, the controller 25 causes the ignition device 41 to rotate the engine 22 and causes the motor generator 24A to assist the rotation of the engine 22. Therefore, in the first assist period FA1, the controller 25 more appropriately controls the rotation speed G.

In the first assist period FA1, the controller 25 controls the ignition device 41 to adjust the ignition timing of the air-fuel mixture in the engine 22. Therefore, it is easy for the controller 25 to more appropriately control the rotation speed G in the first assist period FA1.

### 3. Third embodiment

### 3-1. Schematic configuration of straddled vehicle 1

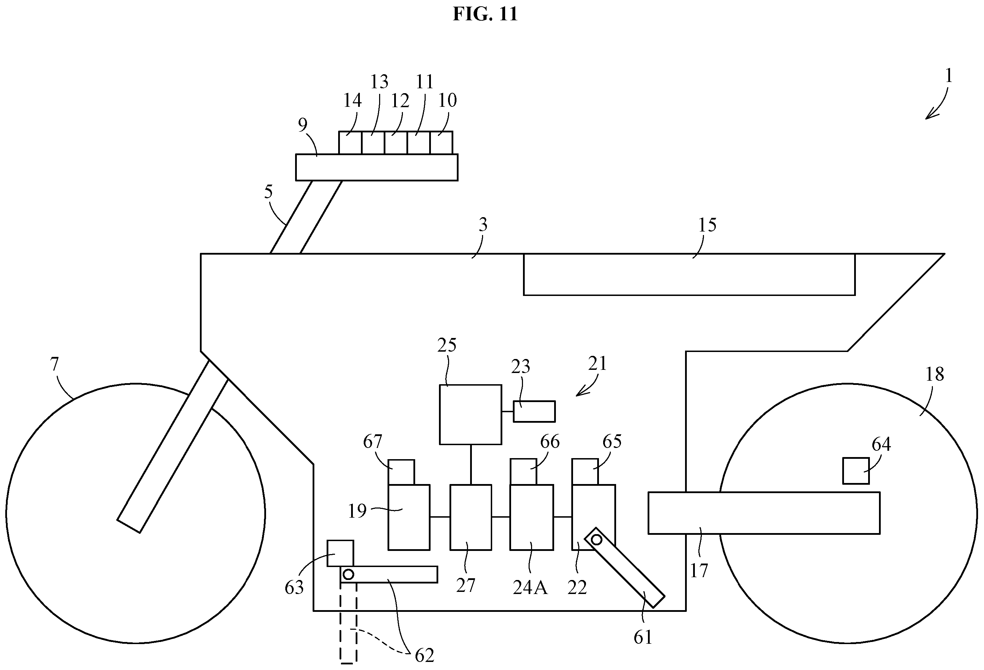

FIG. 11 is a side view of the straddled vehicle 1 according to the third embodiment. The straddled vehicle 1 is, for example, a motorcycle. The same components as those of the first embodiment or the second embodiment are denoted by the same reference signs, and a detailed description thereof will be omitted.

The straddled vehicle 1 includes a main switch 12. The main switch 12 is attached to, for example, the handlebar 9. The main switch 12 is operated by the driver. The driver switches the main switch 12 between an ON state and an OFF state. When the main switch 12 is in the ON state, the motor generator 24A is electrically connected to the battery 19. When the main switch 12 is in the OFF state, the motor generator 24A is electrically disconnected from the battery 19.

The straddled vehicle 1 includes an engine start switch 13. The engine start switch 13 is attached to, for example, the handlebar 9. The engine start switch 13 is operated by the driver. The driver switches the engine start switch 13 between an ON state and an OFF state. When the engine start switch 13 is in the ON state, the controller 25 starts the engine 22 by the motor generator 24A. When the engine start switch 13 is in the OFF state, the controller 25 does not start the engine 22.

The straddled vehicle 1 includes an engine stop switch 14. The engine stop switch 14 is attached to, for example, the handlebar 9. The engine stop switch 14 is operated by the driver. The driver switches the engine stop switch 14 between an ON state and an OFF state. When the engine stop switch 14 is in the ON state, the controller 25 stops the engine 22. When the engine stop switch 14 is in the OFF state, the controller 25 does not stop the engine 22.

The straddled vehicle 1 includes a kick start device 61. The kick start device 61 is for starting the engine 22. For example, the kick start device 61 is used to start the engine 22 when the electric power of the battery 19 is not sufficient to start the engine 22. The kick start device 61 includes, for example, a kick pedal. The kick start device 61 is connected to the engine 22, for example. The driver of the straddled vehicle 1 operates the kick start device 61.

The straddled vehicle 1 includes a stand 62. The stand 62 is movable between a storage position and an upright position. In FIG. 11, the stand 62 positioned at the storage position is indicated by a solid line. In FIG. 11, the stand 62 positioned at the upright position is indicated by a broken line. When the straddled vehicle 1 travels, the stand 62 is positioned at the storage position. When the straddled vehicle 1 stops, the stand 62 is positioned at the upright position. When the stand 62 is at the upright position, the stand 62 keeps the straddled vehicle 1 in an upright posture. The upright position is also referred to as deployed position. The stand 62 is supported by the vehicle body 3, for example. The driver of the straddled vehicle 1 operates the stand 62.

The straddled vehicle 1 includes a third sensor 63. The third sensor 63 detects the position of stand 62. The third sensor 63 is attached to the stand 62, for example.

The straddled vehicle 1 includes a fourth sensor 64. The fourth sensor 64 detects the speed of the straddled vehicle 1. The fourth sensor 64 is attached to, for example, the rear wheel 18.

The engine unit 21 includes a fifth sensor 65. The fifth sensor 65 detects the temperature of the engine 22. The fifth sensor 65 is attached to the engine 22, for example.

The engine unit 21 includes a sixth sensor 66. The sixth sensor 66 detects the state of the motor generator 24A. The state of the motor generator 24A includes, for example, at least one of the voltage of the motor generator 24A, the current of the motor generator 24A, and the temperature of the motor generator 24A. The sixth sensor 66 is attached to, for example, the motor generator 24A.

The straddled vehicle 1 includes a seventh sensor 67. The seventh sensor 67 detects the state of the battery 19. The state of the battery 19 includes, for example, at least one of the voltage of the battery 19, the current of the battery 19, and the temperature of the battery 19. The seventh sensor 67 is attached to, for example, the battery 19.

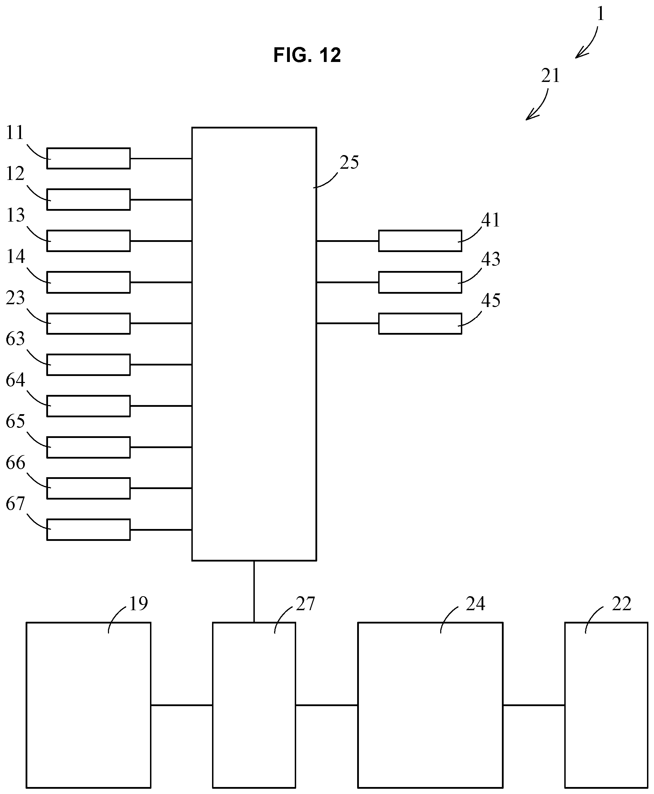

FIG. 12 is a block diagram illustrating the electrical configuration of the engine unit 21.

The controller 25 acquires the detection result of the second sensor 11.

The controller 25 acquires the state of the main switch 12. The controller 25 acquires the state of the engine start switch 13. The controller 25 acquires the state of the engine stop switch 14.

The controller 25 acquires the detection result of the first sensor 23.

The controller 25 acquires the detection result of the third sensor 63. The controller 25 acquires the detection result of the fourth sensor 64. The controller 25 acquires the detection result of the fifth sensor 65. The controller 25 acquires the detection result of the sixth sensor 66. The controller 25 acquires the detection result of the seventh sensor 67.

The controller 25 controls the ignition device 41. The controller 25 controls the throttle device 43. The controller 25 controls the fuel injection device 45.

The controller 25 performs a second assist control DA2 in addition to the first assist control DA1 and the power generation control DG. When the driver switches the engine start switch 13 to the ON state, the controller 25 starts the second assist control DA2 to start the engine 22. That is, when the engine 22 starts, the controller 25 performs the second assist control DA2. In the second assist control DA2, the controller 25 sets the motor generator 24A to the assist mode EA. In the second assist control DA2, the controller 25 causes the motor generator 24A to rotate the engine 22. In the second assist control DA2, the controller 25 starts the engine 22 by the motor generator 24A.

In the second assist control DA2, the battery 19 discharges electric power to the motor generator 24A. In the second assist control DA2, the motor generator 24A converts the electric power discharged from the battery 19 into rotation power. In the second assist control DA2, the motor generator 24A outputs rotation power to the engine 22 and starts rotating the engine 22.

When the rotation speed G is 0, the controller 25 can start the second assist control DA2. When the rotation speed G is higher than the second threshold H2, the controller 25 does not start the second assist control DA2.

When the second assist control DA2 is being executed, the controller 25 does not start the first assist control DA1. While the second assist control DA2 is being executed, the first assist control DA1 is not executed. After the second assist control DA2 ends, the execution of the first assist control DA1 is allowed.

When the first assist control DA1 is being executed, the controller 25 does not start the second assist control DA2.

### 3-2. Operation example of engine unit 21 of third embodiment

For convenience, refer to FIG. 8.

### Steps S11 and S12:

When the start condition A is satisfied, the controller 25 ends the power generation control DG and starts the first assist control DA1.

### Steps S13 and S14:

When the end condition B is satisfied, the controller 25 ends the first assist control DA1 and starts the power generation control DG.

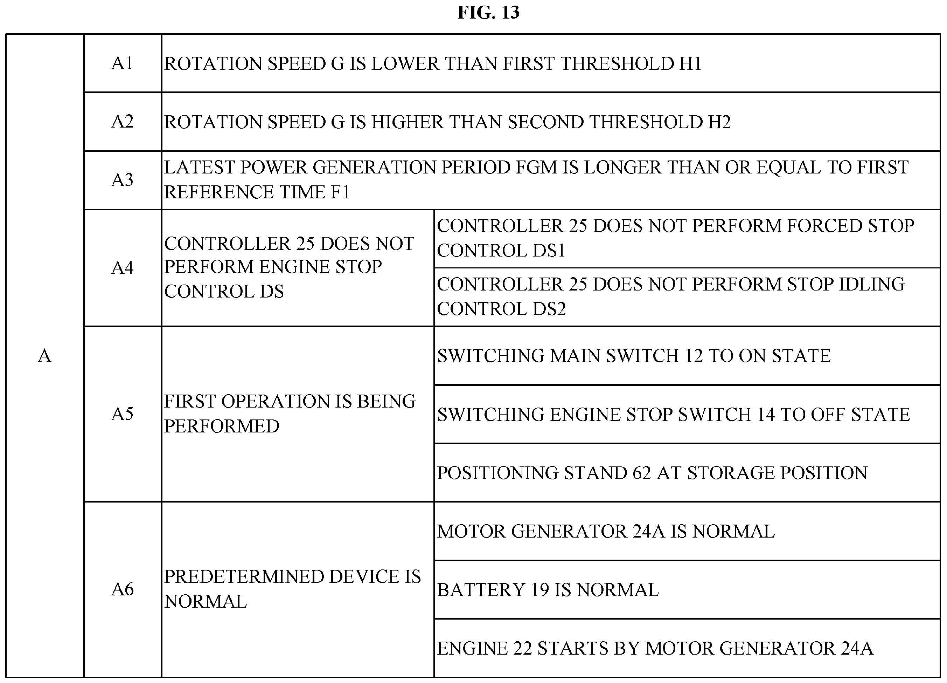

FIG. 13 is a table illustrating specific examples of the start condition A. The start condition A includes first to sixth start conditions A1 to A6. For example, when all of the first to sixth start conditions A1 to A6 are satisfied, the start condition A is satisfied. When at least one of the first to sixth start conditions A1 to A6 is not satisfied, the start condition A is not satisfied.

The first start condition A1 is that "the rotation speed G is lower than the first threshold H1".

The second start condition A2 is that "the rotation speed G is higher than the second threshold H2".

The third start condition A3 is that "the latest power generation period FGM is longer than or equal to the first reference time F1".

The fourth start condition A4 is that "the controller 25 does not perform an engine stop control DS".

The fifth start condition A5 is that "a first operation is being performed".

The sixth start condition A6 is that "a predetermined device is normal".

The fourth start condition A4 will be described. The engine stop control DS is a control for stopping the engine 22. When the controller 25 performs the engine stop control DS, the controller 25 stops the rotation of the engine 22. When the controller 25 does not perform the engine stop control DS, the fourth start condition A4 is satisfied. When the controller 25 performs the engine stop control DS, the fourth start condition A4 is not satisfied.

For example, the engine stop control DS includes at least one of a forced stop control DS1 and a stop idling control DS2. When the controller 25 does not perform the forced stop control DS1 and the controller 25 does not perform the stop idling control DS2, the fourth start condition A4 is satisfied. When the controller 25 performs the forced stop control DS1, the fourth start condition A4 is not satisfied. When the controller 25 performs the stop idling control DS2, the fourth start condition A4 is not satisfied.

For example, when no abnormality related to the engine 22 occurs, the controller 25 does not perform the forced stop control DS1. When an abnormality related to the engine 22 occurs, the controller 25 performs the forced stop control DS1. The "abnormality related to the engine 22" includes, for example, at least one of an abnormality of the first sensor 23, an abnormality of the ignition device 41, an abnormality of the throttle device 43, and an abnormality of the fuel injection device 45.

For example, the controller 25 performs the stop idling control DS2 based on a start-stop system.

Conditions C1 to C4 for the stop idling control DS2 are illustrated below. For example, when at least a part of the conditions C1 to C4 is not satisfied, the controller 25 does not perform the stop idling control. When all of the conditions C1 to C4 are satisfied, the controller 25 performs the stop idling control.

The condition C1 is that "the rotation speed G is within the idle speed range J".

The condition C2 is that "the amount of operation of the accelerator 10 is 0".

The condition C3 is that "the speed of the straddled vehicle 1 is 0".

The condition C4 is that "the temperature of the engine 22 is equal to or higher than a first reference temperature".

The controller 25 determines whether the condition C1 is satisfied based on the detection result of the first sensor 23. The controller 25 determines whether the condition C2 is satisfied based on the detection result of the second sensor 12. The controller 25 determines whether the condition C3 is satisfied based on the detection result of the fourth sensor 64. The controller 25 determines whether the condition C4 is satisfied based on the detection result of the fifth sensor 65.

The fifth start condition A5 will be described. The first operation is an operation by the driver. It is estimated that when the driver performs the first operation, the driver is not about to stop the rotation of the engine 22. In other words, the first operation is an operation by the driver to keep the engine 22 rotating. When the first operation is being performed, the fifth start condition A5 is satisfied. When the first operation is not being performed, the fifth start condition A5 is not satisfied.

For example, the first operation includes at least one of switching the main switch 12 to the ON state, switching the engine stop switch 14 to the OFF state, and positioning the stand 62 at the storage position.

For example, when the main switch 12 is in the ON state, the engine stop switch 14 is in the OFF state, and the stand 62 is at the storage position, the fifth start condition A5 is satisfied. When the main switch 12 is not in the ON state, the fifth start condition A5 is not satisfied. When the engine stop switch 14 is not in the OFF state, the fifth start condition A5 is not satisfied. When the stand 62 is not at the storage position, the fifth start condition A5 is not satisfied.

The controller 25 determines whether the main switch 12 is in the ON state based on the state of the main switch 12. The controller 25 determines whether the engine stop switch 14 is in the OFF state based on the state of the engine stop switch 14. The controller 25 determines whether the stand 62 is at the storage position based on the detection result of the third sensor 63.

The sixth start condition A6 will be described. When the predetermined device is normal, the sixth start condition A6 is satisfied. When the predetermined device is not normal, the sixth start condition A6 is not satisfied.

For example, the predetermined device includes at least one of the motor generator 24A and the battery 19. For example, when the motor generator 24A is normal and the battery 19 is normal, the sixth start condition A6 is satisfied. When the motor generator 24A is not normal, the sixth start condition A6 is not satisfied. When the battery 19 is not normal, the sixth start condition A6 is not satisfied.

For example, when the voltage of the motor generator 24A is normal, the current of the motor generator 24A is normal, and the temperature of the motor generator 24A is normal, the controller 25 determines that the motor generator 24A is normal. The controller 25 determines whether the motor generator 24A is normal based on the detection result of the sixth sensor 66.

For example, when the voltage of the battery 19 is normal, the current of the battery 19 is normal, and the temperature of the battery 19 is normal, the controller 25 determines that the battery 19 is normal. The controller 25 determines whether the battery 19 is normal based on the detection result of the seventh sensor 67.

For example, when the engine 22 is started by the motor generator 24A instead of the kick start device 61, the controller 25 determines that the battery 19 and the motor generator 24A are normal. In this case, the controller 25 determines whether the battery 19 and the motor generator 24A are normal based on the detection result of the first sensor 23 and the state of the engine start switch 13. Specifically, the controller 25 specifies when the engine 22 is started based on the detection result of the first sensor 23. Further, the controller 25 specifies whether the engine start switch 13 has been in the ON state when the engine 22 is started. As a result, in a case where the engine start switch 13 is in the ON state when the engine 22 is started, it is estimated that the engine 22 is started by the motor generator 24A. Therefore, in a case where the engine start switch 13 is in the ON state when the engine 22 is started, the controller 25 determines that the battery 19 and the motor generator 24A are normal. In a case where the engine start switch 13 is not in the ON state when the engine 22 is started, it is estimated that the engine 22 is started by the kick start device 61. Therefore, in a case where the engine start switch 13 is not in the ON state when the engine 22 is started, the controller 25 determines that at least one of the battery 19 and the motor generator 24A is not normal.

A case where the controller 25 starts the first assist control DA1 and a case where the controller 25 does not start the first assist control DA1 are listed below.

When the start condition A is satisfied, the controller 25 starts the first assist period FA1. For example, when all of the first to sixth start conditions A1 to A6 are satisfied, the controller 25 starts the first assist period FA1.

When the start condition A is not satisfied, the controller 25 does not start the first assist period FA1. For example, when at least one of the first to sixth start conditions A1 to A6 is not satisfied, the controller 25 does not start the first assist period FA1.

When the rotation speed G is greater than or equal to the first threshold H1, the controller 25 does not start the first assist control DA1.

When the rotation speed G is less than or equal to the second threshold H2, the controller 25 does not start the first assist control DA1.

When the latest power generation period FGM is shorter than the first reference time F1, the controller 25 does not start the first assist control DA1.

When the controller 25 performs the engine stop control DS, the controller 25 does not start the first assist control DA1.

For example, even in a case where the rotation speed G is lower than the first threshold H1, the controller 25 does not start the first assist control DA1 when the controller 25 performs the engine stop control DS.

For example, when the rotation speed G is lower than the first threshold H1 and the controller 25 does not perform the engine stop control DS, the controller 25 starts the first assist control DA1.

When the first operation is not being performed, the controller 25 does not start the first assist control DA1.

Even in a case where the rotation speed G is lower than the first threshold H1, the controller 25 does not start the first assist control DA1 when the first operation is not being performed.

For example, when the rotation speed G is lower than the first threshold H1 and the first operation is being performed, the controller 25 starts the first assist control DA1.

When the predetermined device is not normal, the controller 25 does not start the first assist control DA1.

Even in a case where the rotation speed G is lower than the first threshold H1, the controller 25 does not start the first assist control DA1 when the predetermined device is not normal.

For example, when the rotation speed G is lower than the first threshold H1 and the predetermined device is normal, the controller 25 starts the first assist control DA1.

While the second assist control DA2 is being executed, the controller 25 does not start the first assist control DA1. After the second assist control DA2 ends, the controller 25 can start the first assist control DA1.

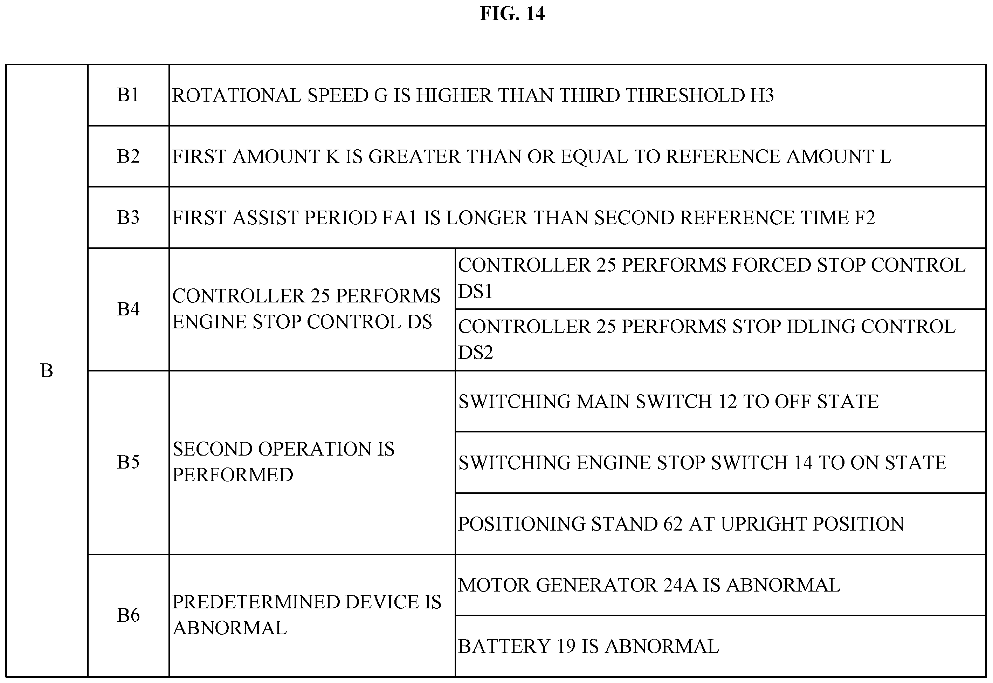

FIG. 14 is a table illustrating specific examples of the end condition B. The end condition B includes the first to sixth start conditions B1 to B6. For example, when at least one of the first to sixth end conditions B1 to B6 is satisfied, the end condition B is satisfied. For example, when none of the first to sixth end conditions B1 to B6 is satisfied, the end condition B is not satisfied.

The first end condition B1 is that "the rotation speed G is higher than the third threshold H3".

The second end condition B2 is that "the first amount K is greater than or equal to the reference amount L".

The third end condition B3 is that "the first assist period FA1 is longer than a second reference time F2".

The fourth end condition B4 is that "the controller 25 performs the engine stop control DS".

The fifth end condition B5 is that "a second operation is performed".

The sixth end condition B6 is that "a predetermined device is abnormal".

The third end condition B3 will be described. When the first assist period FA1 is less than or equal to the second reference time F2, the third end condition B3 is satisfied. When the first assist period FA1 is longer than the second reference time F2, the third end condition B3 is satisfied.

The second reference time F2 is set in advance.

The second reference time F2 is shorter than the first reference time F1.

The second reference time F2 is, for example, substantially equal to the time taken for the engine 22 to perform 5 cycles.

The second reference time F2 is, for example, longer than or equal to 0.5 seconds.

The second reference time F2 is, for example, less than or equal to 2 seconds.

The second reference time F2 is, for example, 1 second.

The second reference time F2 is, for example, 0.6 seconds.

The fourth end condition B4 will be described. When the controller 25 performs the engine stop control DS, the fourth end condition B4 is satisfied. When the controller 25 does not perform the engine stop control DS, the fourth end condition B4 is not satisfied.

For example, the engine stop control DS includes at least one of the forced stop control DS1 and the stop idling control DS2. When the controller 25 performs the forced stop control DS1, the fourth end condition B4 is satisfied. When the controller 25 performs the stop idling control DS2, the fourth end condition B4 is satisfied. When the controller 25 does not perform the forced stop control DS1 and the controller 25 does not perform the stop idling control DS2, the fourth end condition B4 is not satisfied.

The fifth end condition B5 will be described. The second operation is an operation by the driver. It is estimated that when the driver performs the second operation, the driver is about to stop the rotation of the engine 22. In other words, the second operation is an operation by the driver to stop the engine 22. When the second operation is being performed, the fifth end condition B5 is satisfied. When the second operation is not being performed, the fifth end condition B5 is not satisfied.

For example, the second operation includes at least one of switching the main switch 12 to the OFF state, switching the engine stop switch 14 to the ON state, and positioning the stand 62 at the upright position.

For example, when the main switch 12 is in the OFF state, the fifth end condition B5 is satisfied. When the engine stop switch 14 is in the ON state, the fifth end condition B5 is satisfied. When the stand 62 is at the upright position, the fifth end condition B5 is satisfied. When the main switch 12 is not in the OFF state, the engine stop switch 14 is not in the ON state, and the stand 62 is not at the upright position, the fifth end condition B5 is not satisfied.

The controller 25 determines whether the main switch 12 is in the OFF state based on the state of the main switch 12. The controller 25 determines whether the engine stop switch 14 is in the ON state based on the state of the engine stop switch 14. The controller 25 determines whether the stand 62 is at the upright position based on the detection result of the third sensor 63.

The sixth end condition B6 will be described. When the predetermined device is abnormal, the sixth end condition B6 is satisfied. When the predetermined device is not abnormal, the sixth end condition B6 is not satisfied.

The predetermined device includes, for example, at least one of the motor generator 24A and the battery 19. For example, when the motor generator 24A is abnormal, the sixth end condition B6 is satisfied. When the battery 19 is abnormal, the sixth end condition B6 is satisfied. When the motor generator 24A is not abnormal and the battery 19 is not abnormal, the sixth end condition B6 is not satisfied.

For example, when the voltage of the motor generator 24A is abnormal, the controller 25 determines that the motor generator 24A is abnormal. When the current of the motor generator 24A is abnormal, the controller 25 determines that the motor generator 24A is abnormal. When the temperature of the motor generator 24A is abnormal, the controller 25 determines that the motor generator 24A is abnormal. The controller 25 determines whether the motor generator 24A is abnormal based on the detection result of the sixth sensor 66.

For example, when the voltage of the battery 19 is abnormal, the controller 25 determines that the battery 19 is abnormal. When the current of the battery 19 is abnormal, the controller 25 determines that the battery 19 is abnormal. When the temperature of the battery 19 is abnormal, the controller 25 determines that the battery 19 is abnormal. The controller 25 determines whether the battery 19 is abnormal based on the detection result of the seventh sensor 67.

A case where the controller 25 ends the first assist control DA1 and a case where the controller 25 does not end the first assist control DA1 are listed below.

When the end condition B is satisfied, the controller 25 ends the first assist period FA1. For example, when at least one of the first to sixth end conditions B1 to B6 is satisfied, the controller 25 ends the first assist period FA1.

When the end condition B is not satisfied, the controller 25 does not end the first assist period FA1. For example, when none of the first to sixth end conditions B1 to B6 is satisfied, the controller 25 does not end the first assist period FA1.

When the rotation speed G is higher than the third threshold H3, the controller 25 ends the first assist control DA1.

When the first amount K is greater than or equal to the reference amount L, the controller 25 ends the first assist control DA1.

When the first assist period FA1 is longer than the second reference time F2, the controller 25 ends the first assist control DA1.

When the controller 25 performs the engine stop control DS, the controller 25 ends the first assist control DA1.

When the second operation is performed, the controller 25 ends the first assist control DA1.

When the predetermined device is abnormal, the controller 25 ends the first assist control DA1.

### 3-3. Effects of third embodiment

Also in the third embodiment, the same effects as those of the first embodiment or the second embodiment are obtained. For example, in the range of the rotation speed G lower than the idle speed range J, the engine unit 21 is comfortable for the driver. In the range of the rotation speed G lower than the idle speed range J, the straddled vehicle 1 is comfortable for the driver. Further, in the third embodiment, the following effects are obtained.

Even in a case where the rotation speed G is lower than the first threshold H1, the controller 25 does not start the first assist control DA1 when the controller 25 performs the engine stop control DS. Therefore, the first assist control DA1 does not hinder the execution of the engine stop control DS. The first assist control DA1 allows the execution of the engine stop control DS stop control.

When the rotation speed G is lower than the first threshold H1 and the controller 25 does not perform the engine stop control DS, the controller 25 starts the first assist control DA1. Therefore, the first assist control DA1 starts at an appropriate timing.

For example, the engine stop control DS includes the forced stop control DS1. Therefore, the first assist control does not hinder the execution of the forced stop control. Therefore, the first assist control allows the smooth execution of the forced stop control.

For example, the engine stop control DS includes the stop idling control DS2. Therefore, the first assist control does not hinder the execution of the stop idling control. Therefore, the first assist control allows the smooth execution of the stop idling control.

Even in a case where the rotation speed G is lower than the first threshold H1, the controller 25 does not start the first assist control DA1 when the first operation for continuing to rotate the engine 22 is not being performed. Therefore, the first assist control DA1 does not hinder the stop of the engine 22. The first assist control DA1 allows the engine 22 to stop.

When the rotation speed G is lower than the first threshold H1 and the first operation is being performed, the controller 25 starts the first assist control DA1. Therefore, the first assist control DA1 starts at an appropriate timing.

For example, the first operation includes switching the main switch 12 to the ON state. Therefore, it is easy to acquire the first operation.

For example, the first operation includes switching the engine stop switch 14 to the OFF state. Therefore, it is easy to acquire the first operation.

For example, the first operation includes at least one of positioning the stand 62 at the storage position. Therefore, it is easy to acquire the first operation.

Even in a case where the rotation speed G is lower than the first threshold H1, the controller 25 does not start the first assist control DA1 when the predetermined device is not normal. Therefore, the first assist control DA1 does not start at an inappropriate timing.

When the rotation speed G is lower than the first threshold H1 and the predetermined device is normal, the controller 25 starts the first assist control DA1. Therefore, the first assist control DA1 starts at an appropriate timing.

For example, the predetermined device includes the motor generator 24A. Therefore, the predetermined device is operated by the first assist control DA1. Therefore, it is easy to start the first assist control DA1 at an appropriate timing.

For example, the predetermined device includes at least one of the battery 19. Therefore, the predetermined device is operated by the first assist control DA1. Therefore, it is easy to start the first assist control DA1 at an appropriate timing.

When the engine 22 starts, the controller 25 performs the second assist control DA2. In the second assist control DA2, the controller 25 causes the motor generator 24A to rotate the engine 22. While the second assist control DA2 is being executed, the first assist control DA1 is not executed. After the second assist control DA2 ends, the execution of the first assist control DA1 is allowed. Therefore, the first assist control DA1 does not hinder the execution of the second assist control DA2. Therefore, the first assist control DA1 allows the execution of the second assist control DA2.

When the first assist period FA1 is longer than the second reference time F2, the controller 25 ends the first assist control DA1. Therefore, the first assist period FA1 is limited to be less than or equal to the second reference time F2. Therefore, the first assist period FA1 is not excessively long.

The second reference time F2 is less than or equal to 1 second. Therefore, the first assist period FA1 is relatively short.

The second reference time F2 is shorter than the first reference time F1. Therefore, it is easy to increase the balance of electric power.

When the controller 25 performs the engine stop control DS, the controller 25 ends the first assist control DA1. Therefore, the first assist control DA1 does not hinder the execution of the engine stop control DS. The first assist control DA1 allows the execution of the engine stop control DS.

When the second operation for stopping the engine 22 is performed, the controller 25 ends the first assist control DA1. Therefore, the first assist control DA1 does not hinder the stop of the engine 22. The first assist control DA1 allows the engine 22 to stop.

When the predetermined device is abnormal, the controller 25 ends the first assist control DA1. Therefore, the first assist control DA1 does not hinder the stop of the engine 22. Therefore, the first assist control DA1 ends at an appropriate timing.

### 4. Modified embodiments

The present invention is not limited to the above embodiments, and can be modified as follows.
(1) The engine 22 may be classified as a single cylinder. Alternatively, the engine 22 may be classified as a plurality of cylinders.
(2) The engine 22 may be classified as a 4-stroke engine. The engine 22 may be classified as a 2-stroke engine.
(3) The engine 22 may be classified as an air-cooled engine. The engine 22 may be classified as a water-cooled engine.
(4) The engine unit 21 may be fixed to the vehicle body 3. The engine unit 21 may be non-swingable with respect to the vehicle body. The engine unit 21 may be swingable with respect to the vehicle body 3.
(5) The motors 24, 24A may be classified as AC motors. The motors 24, 24A may be classified as DC motors.
(6) The motors 24, 24A may also serve as generators. The motors 24, 24A need not also serve as generators.
(7) The motors 24, 24A may be integrated with a generator. The motors 24, 24A may be separate from the generator.
(8) The rotation axis of the motor 24 may be coaxial with the rotation axis of the engine 22. The rotation axis of the motor 24 need not be coaxial with the rotation axis of the engine 22.
(9) The rotation axis of the motor 24 may be coaxial with the axis 31a of the crankshaft 31. The rotation axis of the motor 24 need not be coaxial with the axis 31a.
(10) The first sensor 23 may directly detect the rotation speed G of the engine 22. The first sensor 23 may directly detect the rotation speed of the crankshaft 31. The first sensor 23 may indirectly detect the rotation speed G of the engine 22. The first sensor 23 may indirectly detect the rotation speed of the crankshaft 31.
(11) The first sensor 23 may include a pickup coil. The first sensor 23 may include a hall IC. The first sensor 23 may include a hall element.
(12) The configuration of the power controller 27 may be changed as appropriate. For example, when the motor 24 is classified as a DC motor, the configuration of the power controller 27 may be changed as appropriate. For example, when the motor 24 is classified as a DC motor, the power controller 27 may be omitted.
(13) The start condition A may include only the first start condition A1. Alternatively, the start condition A may include at least one of the second to sixth start conditions A2 to A6 in addition to the first start condition A1.
(14) The end condition B2 may include at least one of the first to sixth end conditions B1 to B6. For example, the end condition B2 may include only any one of the first to sixth end conditions B1 to B6.
(15) The "rotation speed G is lower than the first threshold H1" of the first start condition A1 may mean that at least one of the instantaneous values g is lower than the first threshold H1. According to the present modified embodiment, when the rotation speed G changes in one cycle, the first start condition A1 is satisfied at a relatively early timing.

The "rotation speed G is lower than the first threshold H1" of the first start condition A1 may mean that an average value GA of the rotation speed G is lower than the first threshold H1. According to the present modified embodiment, when the rotation speed G changes in one cycle, the first start condition A1 is satisfied at a relatively late timing.

Here, the average value GA is, for example, an average value of the rotation speed G in each cycle. The average value GA is, for example, an average value of the instantaneous values g0, g1 ... and g23.

(16) The "rotation speed G is higher than the second threshold H2" of the second start condition A2 may mean that at least one of the instantaneous values g is higher than the second threshold H2. The "rotation speed G is higher than the second threshold H2" of the first start condition A1 may mean that the average value GA is higher than the second threshold H2.

(17) The "rotation speed G is higher than the third threshold H3" of the first end condition B1 may mean that at least one of the instantaneous values g is higher than the third threshold H3. According to the present modified embodiment, when the rotation speed G changes in one cycle, the first end condition B1 is satisfied at a relatively early timing.

The "rotation speed G is higher than the third threshold H3" of the first end condition B1 may mean that the average value GA is higher than the third threshold H3. According to the present modified embodiment, when the rotation speed G changes in one cycle, the first end condition B1 is satisfied at a relatively late timing.

(18) With respect to the second end condition B2, one first amount K may be acquired in each cycle.

Alternatively, a plurality of first amounts K may be acquired in each cycle. For example, the first amount K includes first amounts K1 and K2. The first amount K1 is an increase amount from the first instantaneous value g0 to the second instantaneous value g6. The first amount K2 is an increase amount from the instantaneous value g12 to the instantaneous value g18. According to the present modified embodiment, even if combustion occurs in a crank angle range of 360 degrees to 540 degrees, the increase in the rotation speed G due to the combustion is reflected in the first amount K2. Therefore, even if combustion occurs in the crank angle range of 360 degrees to 540 degrees, it is easy to appropriately determine the second end condition B2.

(19) The "predetermined device" of the sixth start condition A6 may include the power controller 27. The "predetermined device" of the sixth end condition B6 may include the power controller 27. For example, the engine unit 21 includes an eighth sensor (not illustrated). The eighth sensor detects the state of the power controller 27. The state of the power controller 27 includes, for example, at least one of the voltage of the power controller 27, the current of the power controller 27, and the temperature of the power controller 27. The controller 25 determines whether the power controller 27 is normal based on the detection result of the eighth sensor. The controller 25 determines whether the power controller 27 is abnormal based on the detection result of the eighth sensor.

(20) The start of the power generation control DG may be simultaneous with the end of the first assist control DA1. The start of the power generation control DG need not be simultaneous with the end of the first assist control DA1. The power generation control DG may start after the first assist control DA1 ends. The start condition of the power generation control DG may be different from the end condition B of the first assist control DA1.

(21) The end of the power generation control DG may be simultaneous with the start of the first assist control DA1. The end of the power generation control DG need not be simultaneous with the start of the first assist control DA1. The first assist control DA1 may start after the power generation control DG ends. The end condition of the power generation control DG may be different from the start condition A of the first assist control DA1.

(22) The throttle device 43 may be classified as, for example, an electronic control throttle. The throttle device 43 may be classified as, for example, a mechanical throttle.

(23) The number of front wheels 7 may be one. The number of front wheels 7 may be two. The number of rear wheels 18 may be one. The number of rear wheels 18 may be two.

(24) The straddled vehicle 1 may be classified into a sports-type category. The straddled vehicle 1 may be classified into any category of a street type vehicle, a scooter type vehicle, and an all-terrain vehicle.

(25) The embodiments and each modified embodiment described in the above (1) to (24) may be appropriately changed by, for example, further replacing or combining each configuration with a configuration of another modified embodiment.

### Reference Signs List

- 1: straddled vehicle
- 3: vehicle body
- 7: front wheel
- 9: handle
- 10: accelerator
- 11: second sensor (accelerator sensor)
- 12: main switch
- 13: engine start switch
- 14: engine stop switch
- 15: seat
- 18: rear wheel
- 19: battery
- 21: engine unit
- 22: engine
- 23: first sensor (rotation speed sensor)
- 24: motor
- 24A: motor generator (motor, generator)
- 25: controller
- 27: power controller
- 28: switching unit
- 31: crankshaft
- 31a: crankshaft axis
- 33: piston
- 34: combustion chamber
- 41: ignition device
- 43: throttle device
- 44: throttle valve
- 45: fuel injection device
- 51: rotor
- 52: rotor core
- 53: magnet
- 55: protrusion
- 56: stator
- 57: stator core
- 58: winding
- 61: kick start device
- 62: stand
- 63: third sensor (stand position sensor)
- 64: fourth sensor (straddled vehicle speed sensor)
- 65: fifth sensor (engine temperature sensor)
- 66: sixth sensor (motor state sensor)
- 67: seventh sensor (battery state sensor)
- A: start condition
- A1: first start condition "rotation speed G is lower than first threshold H1"
- A2: second start condition "rotation speed G is higher than second threshold H2"
- A3: third start condition "latest power generation period FGM is longer than or equal to first reference time F1"
- A4: fourth start condition "controller 25 does not perform engine stop control DS"
- A5: fifth start condition "first operation is being performed"
- A6: sixth start condition "predetermined device is normal"
- B1: first end condition "rotation speed G is higher than third threshold H3"
- B2: second end condition "first amount K is greater than or equal to reference amount L"
- B3: third end condition "first assist period FA1 is longer than second reference time F2"
- B4: fourth end condition "controller 25 performs engine stop control DS"
- B5: fifth end condition "second operation is performed"
- B6: sixth end condition "predetermined device is abnormal"
- DA1, DA1a, DAlb: first assist control
- DA2: second assist control (engine start control)
- DG, DGa, DGb: power generation control
- EA: assist mode
- EG: power generation mode
- FA1, FA1a, FAlb: first assist period
- FG, FGa, FGb: power generation period
- F1: first reference time
- F2: second reference time
- G: rotation speed
- GA: average value of rotation speed
- g, g0-g23: instantaneous value of rotation speed
- H1: first threshold
- H2: second threshold
- H3: third threshold
- J: idle speed range
- JU: upper limit of idle speed range
- JL: lower limit of idle speed range
- K, K1, K2: first amount
- L: reference amount

## Claims

1. An engine unit comprising:
an engine;
a motor that is connected to the engine and configured to rotate the engine;
a first sensor that detects a rotation speed of the engine; and
a controller that performs a first assist control based on a detection result of the first sensor, wherein
in the first assist control, the controller causes the motor to rotate the engine,
when the rotation speed is lower than a first threshold, the controller starts the first assist control, and
the first threshold is lower than an idle speed range of the engine.

2. The engine unit according to claim 1, wherein
the idle speed range has a lower limit, and
the first threshold is lower than the lower limit.

3. The engine unit according to claim 1 or 2, wherein
when the rotation speed is lower than the first threshold and higher than a second threshold, the controller starts the first assist control, and
the second threshold is lower than the first threshold and higher than 0.

4. The engine unit according to claim 1 or 2, wherein
when the rotation speed decreases from a value higher than the first threshold to a value lower than the first threshold, the controller starts the first assist control.

5. The engine unit according to claim 1 or 2, further comprising
a generator that is configured to generate power by rotation of the engine, wherein
a period during which the generator generates electric power after an end of the first assist control, which is the latest, is defined as a latest power generation period, and
even in a case where the rotation speed is lower than the first threshold, the controller does not start the first assist control until the latest power generation period becomes longer than or equal to a first reference time.

6. The engine unit according to claim 5, wherein
the motor is configured to generate rotation power by electric power discharged from a battery, and
the generator is configured to charge the battery.

7. The engine unit according to claim 5, wherein
the motor also serves as the generator.

8. The engine unit according to claim 1 or 2, wherein
the controller ends the first assist control based on the detection result of the first sensor.

9. The engine unit according to claim 8, wherein
when the rotation speed is greater than or equal to a third threshold, the controller ends the first assist control, and
the third threshold is higher than the first threshold.

10. The engine unit according to claim 9, wherein
the idle speed range has an upper limit, and
the third threshold is less than or equal to the upper limit.

11. The engine unit according to claim 1 or 2, wherein
the controller acquires a first amount based on the detection result of the first sensor,
the first amount is an increase in the rotation speed due to combustion of the engine, and
the controller ends the first assist control based on the first amount.

12. The engine unit according to claim 1 or 2, wherein
when a first assist period during which the first assist control is executed is longer than a second reference time, the controller ends the first assist control.

13. The engine unit according to claim 12, wherein
the second reference time is less than or equal to 1 second.

14. A straddled vehicle comprising the engine unit according to claim 1 or 2.

15. The straddled vehicle according to claim 14, wherein
the controller starts the first assist control regardless of a speed of the straddled vehicle.
